(19) Europäisches Patentamt
European Patent Office
Office européen des brevets

(11) **EP 2 941 034 B1**

(12) **EUROPEAN PATENT SPECIFICATION**

(45) Date of publication and mention
of the grant of the patent:
**05.07.2017 Bulletin 2017/27**

(51) Int Cl.:
***H04W 16/16*** *(2009.01)*  ***H04W 16/14*** *(2009.01)*

(21) Application number: **12890760.7**

(86) International application number:
**PCT/JP2012/083394**

(22) Date of filing: **25.12.2012**

(87) International publication number:
**WO 2014/102891 (03.07.2014 Gazette 2014/27)**

(54) **COMMUNICATION SYSTEM, COMMUNICATION CONTROL APPARATUS, WIRELESS COMMUNICATION APPARATUS, AND COMMUNICATION METHOD**

KOMMUNIKATIONSSYSTEM, KOMMUNIKATIONSSTEUERUNGSVORRICHTUNG, DRAHTLOSE KOMMUNIKATIONSVORRICHTUNG UND KOMMUNIKATIONSVERFAHREN

SYSTÈME DE COMMUNICATION, APPAREIL DE COMMANDE DE COMMUNICATION, APPAREIL DE COMMUNICATION SANS FIL ET PROCÉDÉ DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietor: **Fujitsu Limited**
**Kawasaki-shi, Kanagawa 211-8588 (JP)**

(72) Inventor: **OYAMA, Teppei**
**Kawasaki-shi**
**Kanagawa 211-8588 (JP)**

(74) Representative: **Ward, James Norman et al**
**Haseltine Lake LLP**
**Bürkleinstrasse 10**
**80538 München (DE)**

(56) References cited:
**WO-A1-2010/109526    WO-A1-2011/070224**
**US-A1- 2011 310 867**

**Description**

TECHNICAL FIELD

The present invention relates to a communications system, a communications control apparatus, a radio communications apparatus, and a communications method.

BACKGROUND ART

Radio traffic continues to increase rapidly and demand for limited frequency resources continues to increase. As one means of achieving effective use of frequency, cognitive radio technology, which is cognizant of the local radio wave environment and optimizes communication, is being studied. For example, whitespace type (or frequency shared type) cognitive radio has a function that finds frequency whitespace (WS), which is dependent on time and location, to perform communication so as not to interfere with systems allowed preferential use of frequency. Use of TV whitespace (TVWS) for communications is under investigation in US, for example.

With whitespace type cognitive radio, for example, a system having priority to use a frequency is called a primary system, while a system finding a whitespace for communication is called a secondary system. In the case of TVWS, systems for TV broadcasting are primary systems.

Wide frequency bandwidths in the ultra-high frequency (UHF) spectrum, etc. are assigned for the TV broadcasting. The frequencies (physical TV channels) used differ from place to place and have little temporal variation. Methods of finding such quasi-static TVWS include, for example, a sensing scheme and a database accessing scheme. For example, rules announced by the federal communications commission (FCC) prescribe a sensing scheme and a database accessing scheme.

In the database accessing scheme, a secondary system, for example, accesses a database on the network to obtain WS information indicative of whitespace. The database stores WS information correlated with position information, the WS information being calculated from information such as the location of TV transmitting stations, transmission power, and transmission frequency. FCC rules prescribe that when using TVWS, a secondary system employing a database accessing scheme should access the database at least once a day.

According to a known technique (see, for example, Patent Document 1 below), a detection frequency channel is detected based on radio waves transmitted from a first existing system, a reception frequency channel is received from a nearby device, and based on the detection frequency channel, the reception frequency channel, and list frequency channels indicated by a frequency list, a new frequency list indicating the frequency channels is created and stored.

Patent Document 1: Japanese Laid-Open Patent Publication No. 2012-54799

DISCLOSURE OF INVENTION

PROBLEM TO BE SOLVED BY THE INVENTION

Nonetheless, with the conventional technique above, frequency switching may increase since the available frequency changes with the movement of the radio communications device.

To solve problems associated with the technique above, one object of the present invention is to provide a communications system, a communications control apparatus, a radio communications apparatus, and a communications method capable of reducing frequency switching.

MEANS FOR SOLVING PROBLEM

To solve the problems above and achieve an object, according to one aspect of the present invention, a communications system, a communications control apparatus, a radio communications apparatus, and a communications method are proposed where in the communications system including the radio communications apparatus and the communications control apparatus, the radio communications apparatus transmits to the communications control apparatus, route information indicating a position of the radio communications apparatus and a predicted route of the radio communications apparatus; the communications control apparatus calculates for each frequency available to the radio communications apparatus at the position of the radio communications apparatus, any one among a predicted time and a predicted movement distance for the frequency to become unavailable to the radio communications apparatus, based on the route information transmitted from the radio communications apparatus and, correspondence information of positions of the radio communications apparatus and frequencies available to the radio communications apparatus.

US 2011/310867 A1 discloses example methods and apparatus to predict routing to maintain connectivity over a geographic area. A disclosed example method involves selecting network connection configurations for subsequent connections of a wireless terminal to access networks and generating a listing of network connection locations based on the selected network connection configurations. The example method also involves sending the listing of network connection locations to a geographic navigation program to enable selecting a geographic route based on the network connection locations.

WO 2011/070224 A1 discloses an apparatus for providing an advance indication of channels available for use by a mobile device travelling along a geographic path. The path extends across two or more cells, with each cell defining a particular set of radio channels available for use by the mobile device in that cell. The apparatus is configured to receive predicted geographic path signaling associated with prediction of the geographic path to be taken by the mobile device. The apparatus is also configured to provide, in advance, an indication of the radio channels available for use by the mobile device along the geographic path in each respective cell along the path.

WO 2010/109526 A1 discloses a computer which refers to a storage means to store each availability level for a plurality of channels at each of a plurality of spots by associating spot identifiers for identifying a plurality of spots on a route where a vehicle travels with channel identifiers for identifying a plurality of broadcasting radio wave channels. Thereafter, the computer narrows down a plurality of potentially available channel setup patterns. Each of the channel setup patterns is a combination pattern that associates each channel identifier with a plurality of spot identifiers representing a plurality of spots. Narrowing-down is based on a distribution of one or more channel identifiers in a channel identifier tuple where each of the channel identifiers corresponding to at least a part of a plurality of spot identifiers is placed according to the order in the route at each spot represented by each spot identifier and the availability level readout. Subsequently, the computer presents one or more channel setup patterns obtained as a result of the narrowing-down.

The communications control apparatus further selects a frequency to be used by the radio communications apparatus among the frequencies available to the radio communications apparatus at the position of the radio communications apparatus, based on any one among the predicted time and the predicted movement distance calculated by the calculating unit; and transmits to the radio communications apparatus, frequency information indicating the frequency selected by the selecting unit. The radio communications apparatus performs radio communication using the frequency indicated by the frequency information transmitted from the communications control apparatus.

EFFECT OF THE INVENTION

According to one aspect of the present invention, reduced frequency switching can be achieved.

BRIEF DESCRIPTION OF DRAWINGS

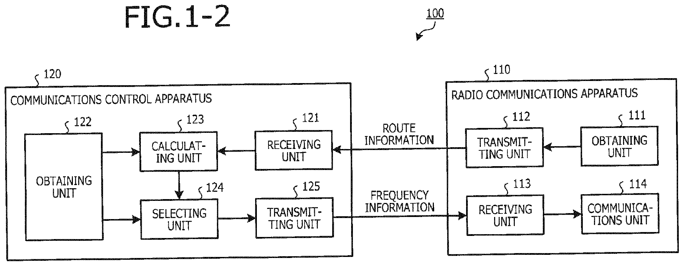

FIG. 1-1 is a diagram of an example of a communications system according to a first embodiment;
FIG. 1-2 is a diagram of an example of signal flow in the communications system depicted in FIG. 1-1;
FIG. 2 is a diagram of a first application example of the communications system according to the first embodiment;
FIG. 3-1 is a diagram of an example of configuration of the communications system depicted in FIG. 2;
FIG. 3-2 is a diagram of an example of signal flow in the communications system depicted in FIG. 3-1;
FIG. 3-3 is a diagram of an example of hardware configuration of an access point;

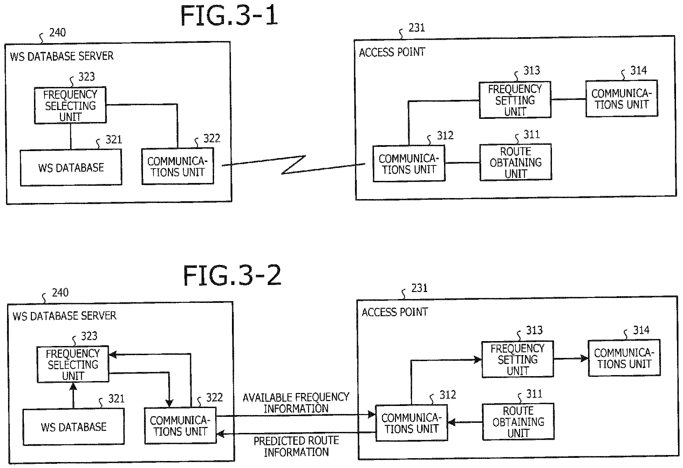

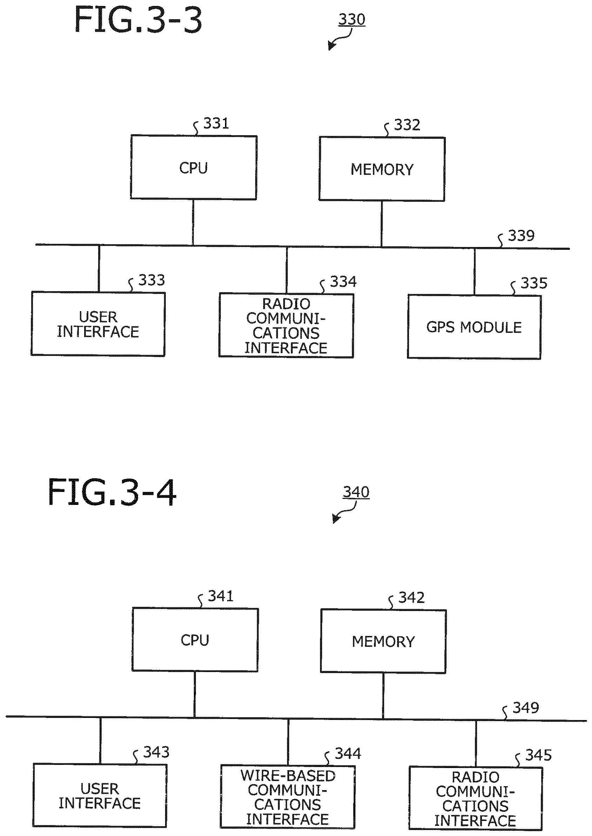

FIG. 3-4 is a diagram of an example of hardware configuration of a WS database server;

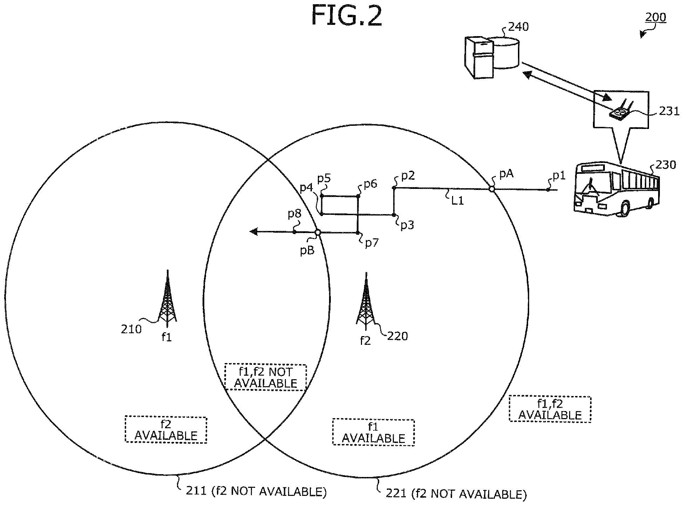

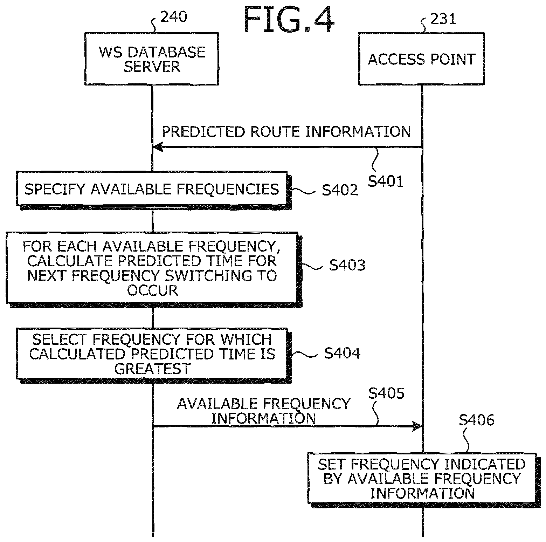

FIG. 4 is a sequence diagram of an operation example of the communications system depicted in FIG. 2;

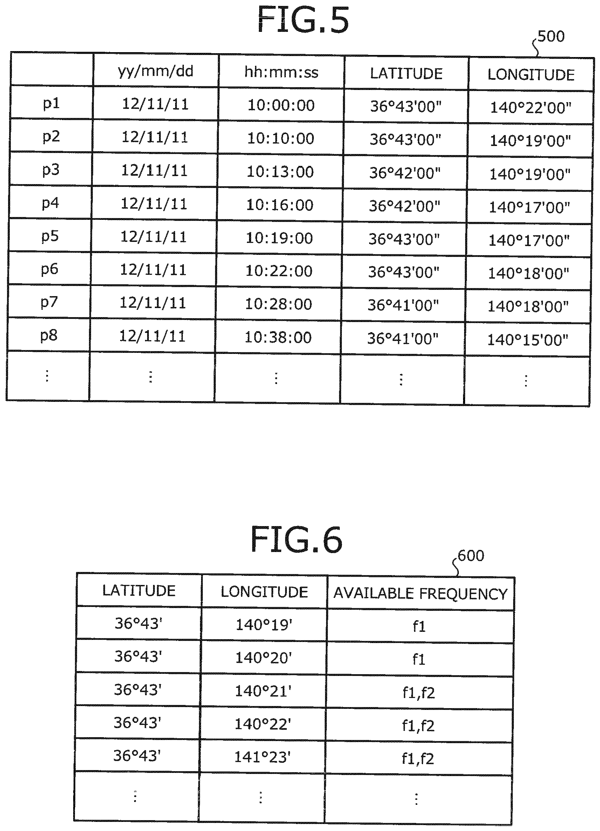

FIG. 5 is a diagram of an example of predicted route information transmitted by the access point;
FIG. 6 is a diagram of an example of correspondence information stored in a WS database;

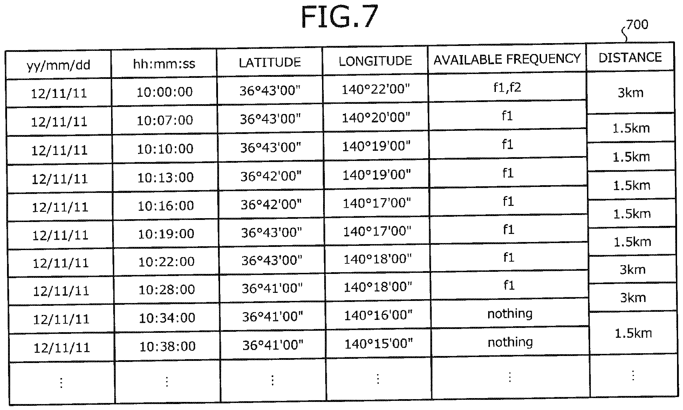

FIG. 7 is a diagram of an example of frequencies available at positions on the predicted route depicted in FIG. 2;

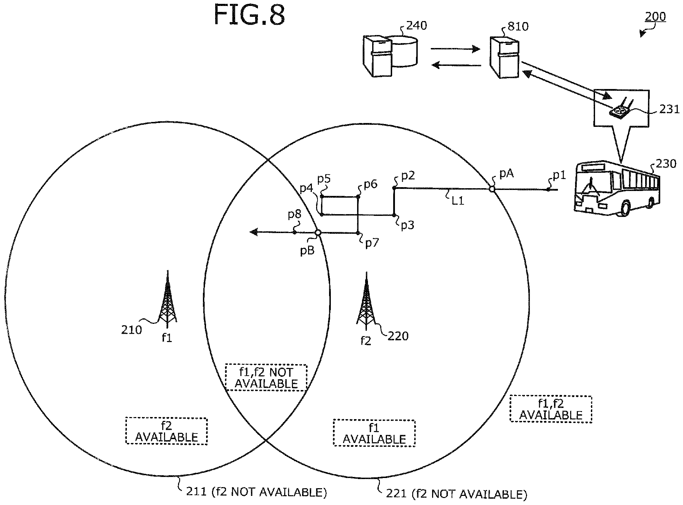

FIG. 8 is a diagram of a second application example of the communications system according to the first embodiment;

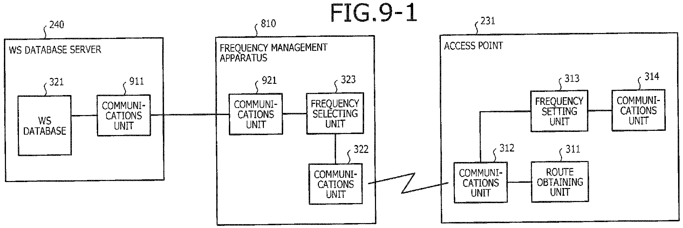

FIG. 9-1 is a diagram of an example of configuration of the communications system depicted in FIG. 8;

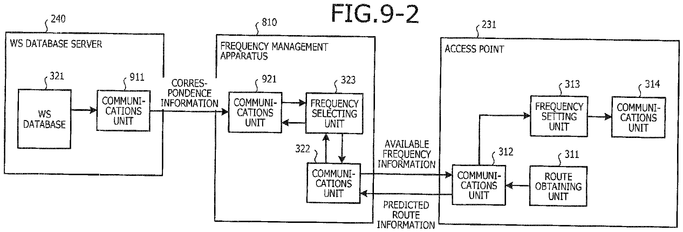

FIG. 9-2 is a diagram of an example of signal flow in the communications system depicted in FIG. 9-1;

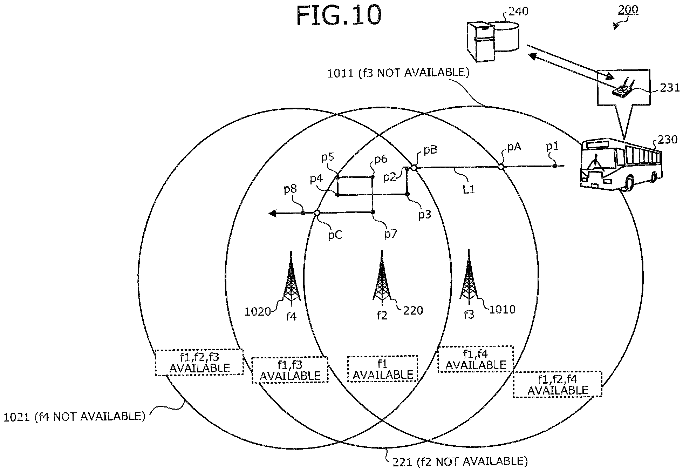

FIG. 10 is a diagram of a third application example of the communications system according to the first embodiment;

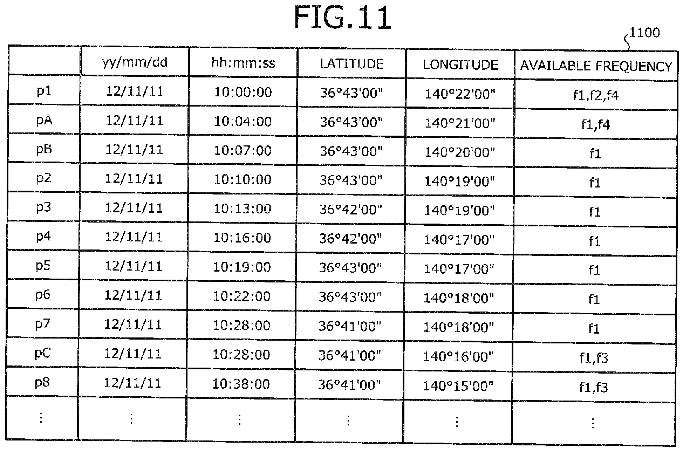

FIG. 11 is a diagram of an example of frequencies available at positions on a predicted route depicted in FIG. 10;

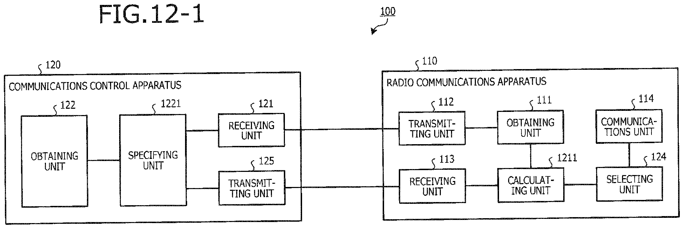

FIG. 12-1 is a diagram of an example of the communications system according to a second embodiment;

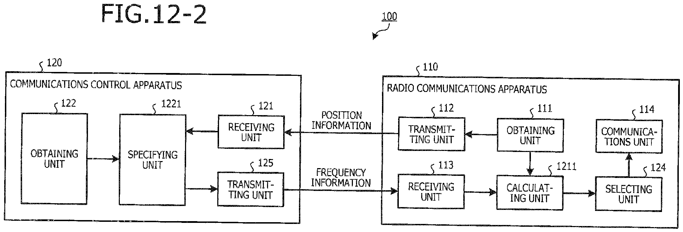

FIG. 12-2 is a diagram of an example of signal flow in the communications system depicted in FIG. 12-1;

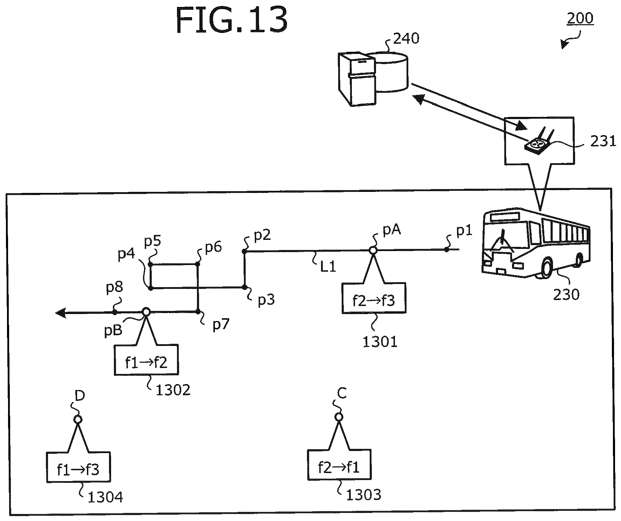

FIG. 13 is a diagram of an application example of the communications system according to the second embodiment;

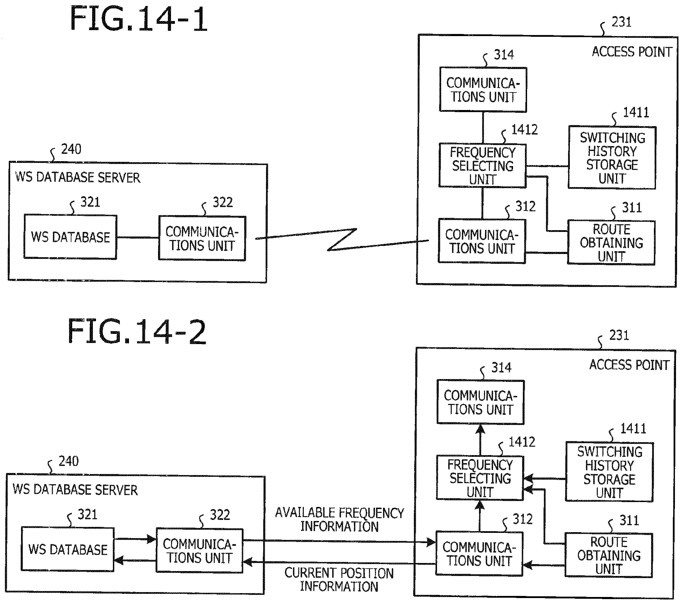

FIG. 14-1 is a diagram of an example of configuration of the communications system depicted in FIG. 13;
FIG. 14-2 is a diagram of an example of signal flow in the communications system depicted in FIG. 14-1;

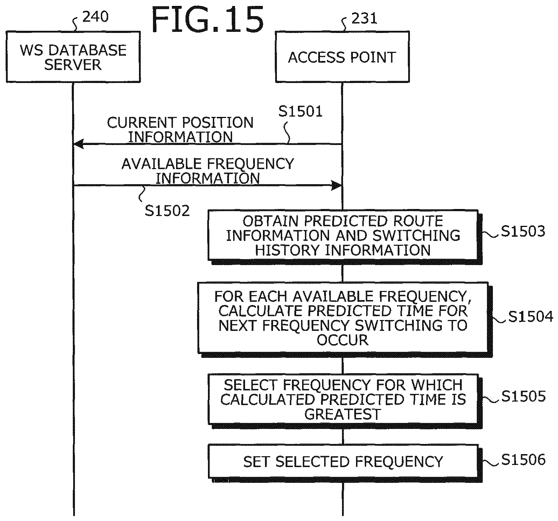

FIG. 15 is a sequence diagram of an operation example of the communications system depicted in FIG. 13;

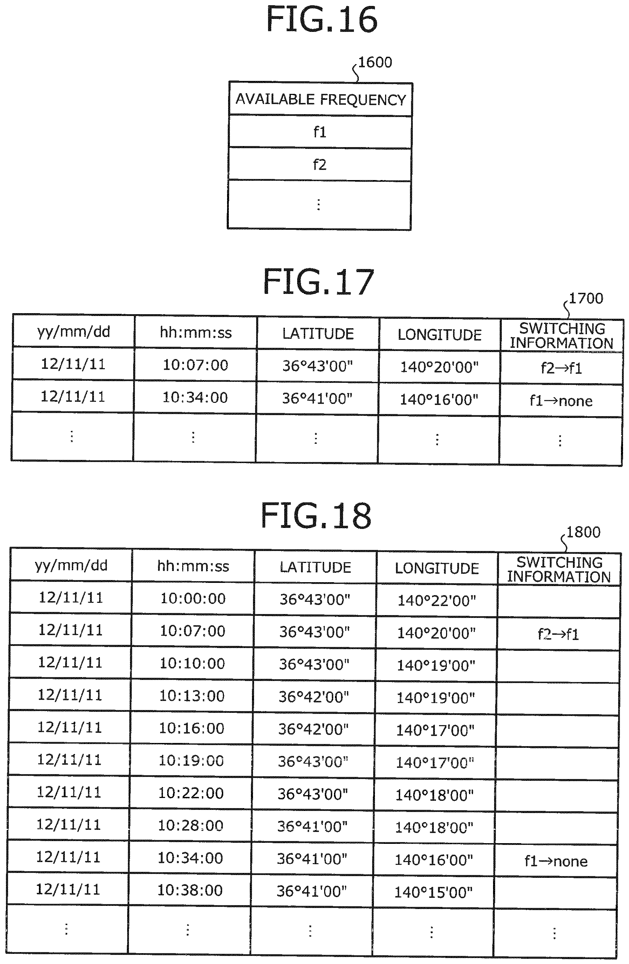

FIG. 16 is a diagram of an example of available frequency information;

FIG. 17 is a diagram of an example of switching history information;

FIG. 18 is a diagram of an example of frequency switching history on the predicted route depicted in FIG. 13;

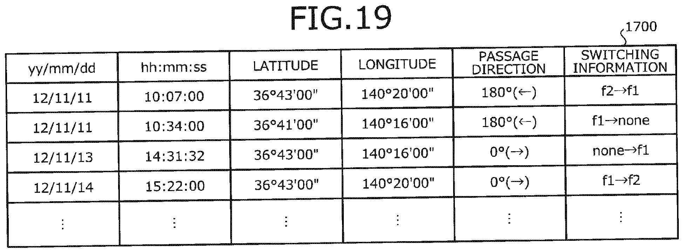

FIG. 19 is a diagram of another example of the switching history information;

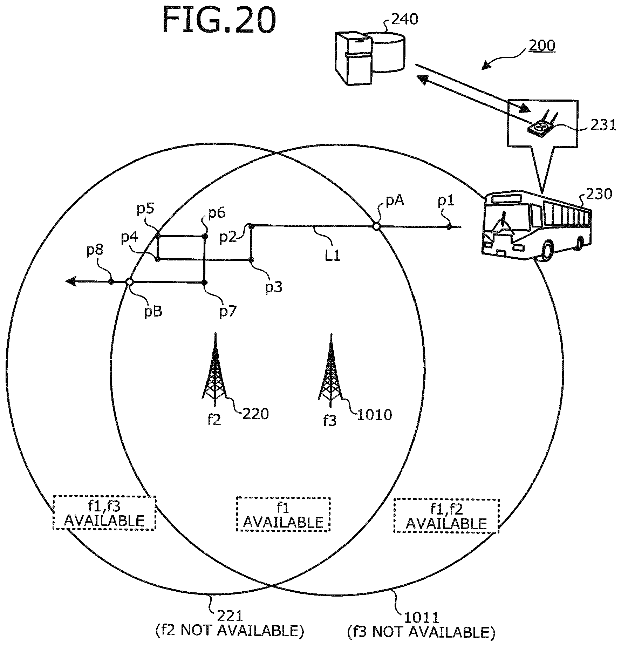

FIG. 20 is a diagram of an application example of the communications system according to a third embodiment;

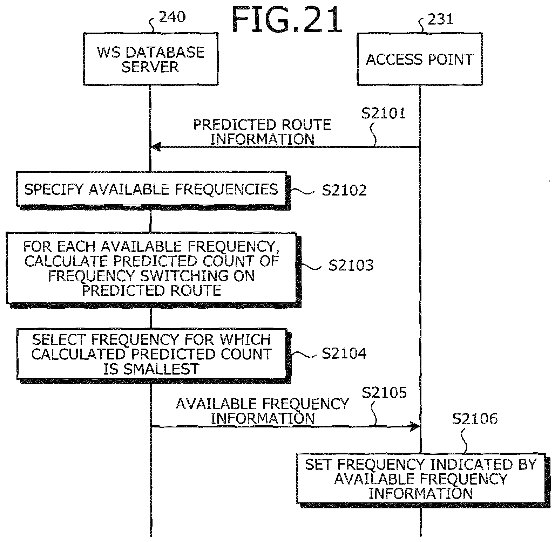

FIG. 21 is a sequence diagram of an operation example of the communications system depicted in FIG. 20;

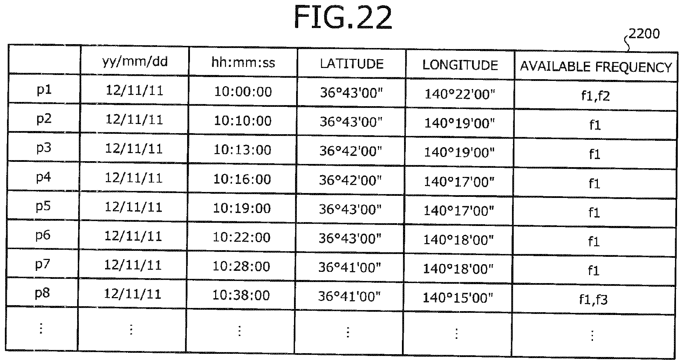

FIG. 22 is a diagram of an example of frequencies available at positions on a predicted route depicted in FIG. 20;

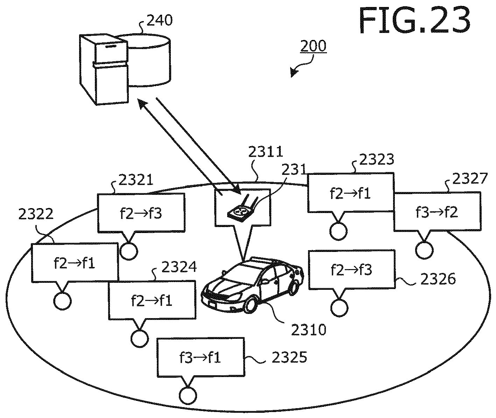

FIG. 23 is a diagram of an application example of the communications system according to a fourth embodiment;

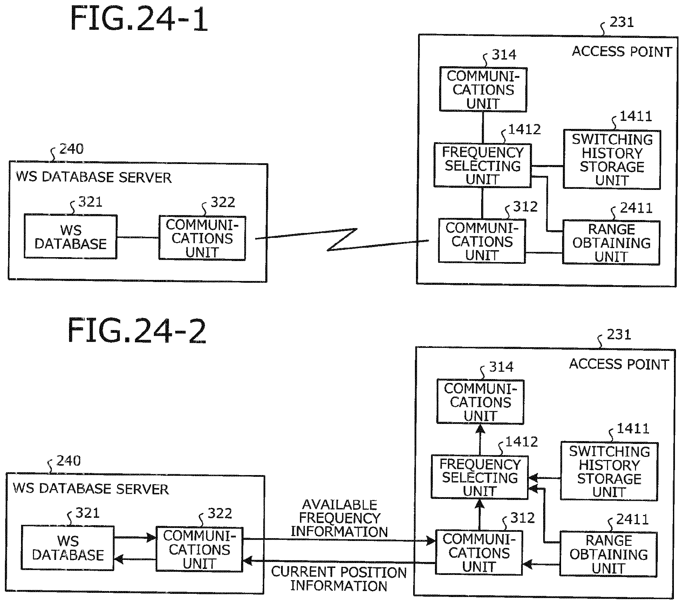

FIG. 24-1 is a diagram of an example of configuration of the communications system depicted in FIG. 13;

FIG. 24-2 is a diagram of an example of signal flow in the communications system depicted in FIG. 24-1;

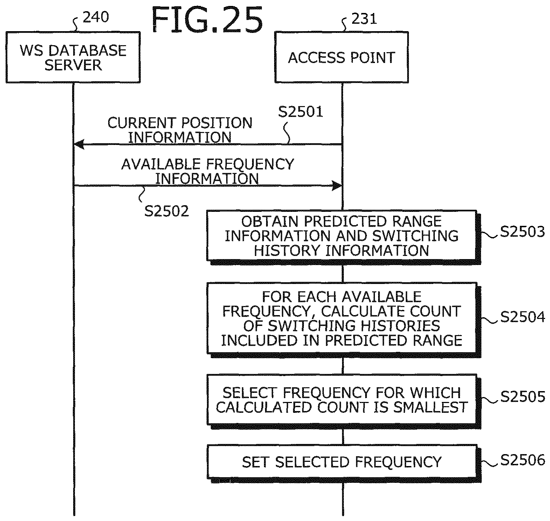

FIG. 25 is a sequence diagram of an operation example of the communications system depicted in FIG. 23;

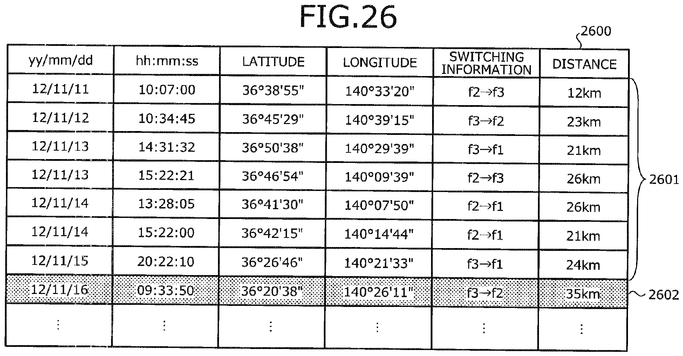

FIG. 26 is a diagram of an example of the distance between a history position and a current position;

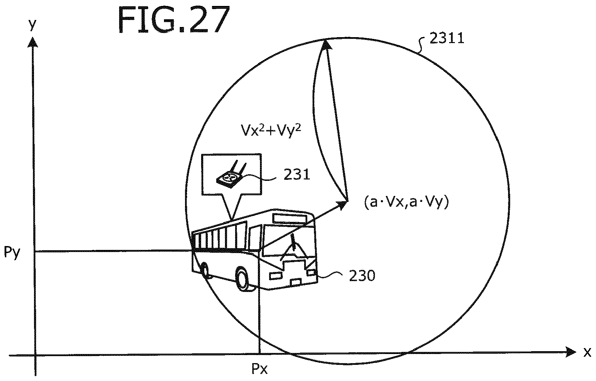

FIG. 27 is a diagram of another example of a predetermined range;

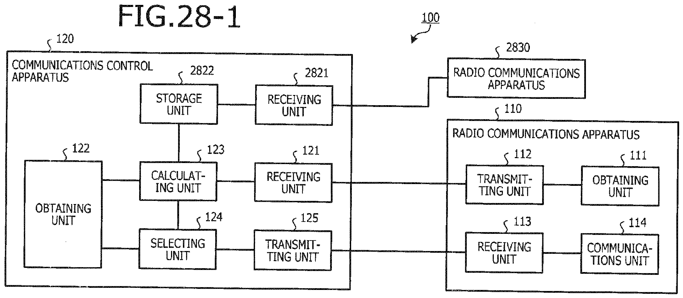

FIG. 28-1 is a diagram of an example of the communications system according to a fifth embodiment;

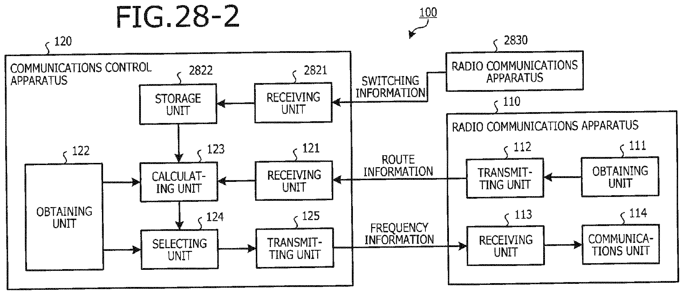

FIG. 28-2 is a diagram of an example of signal flow in the communications system depicted in FIG. 28-1;

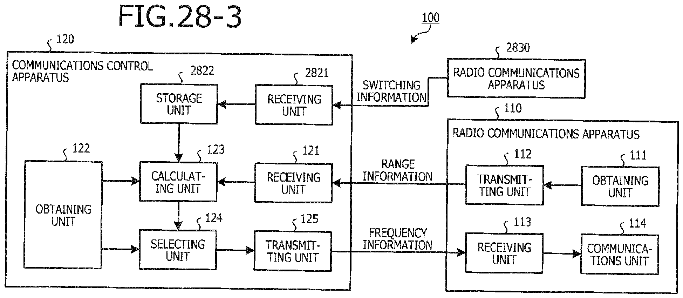

FIG. 28-3 is a diagram of another example of signal flow in the communications system depicted in FIG. 28-1;

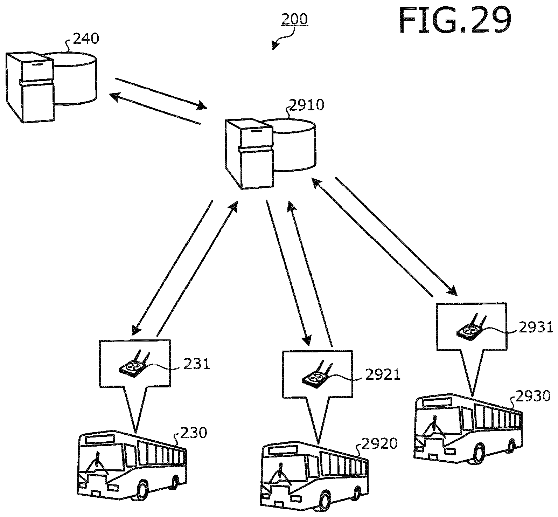

FIG. 29 is a diagram of an application example of the communications system according to the fifth embodiment;

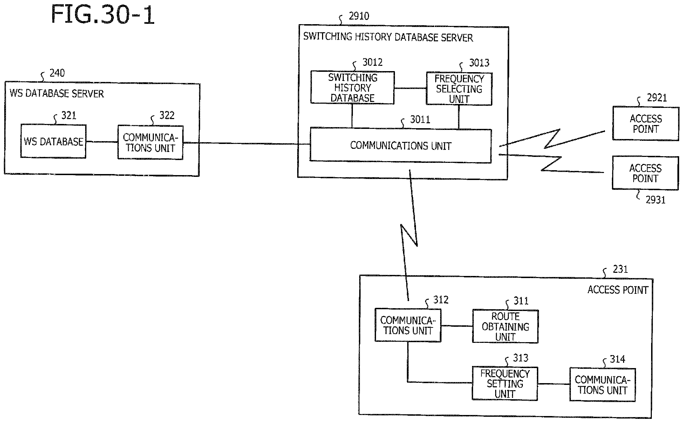

FIG. 30-1 is a diagram of an example of configuration of the communications system depicted in FIG. 29;

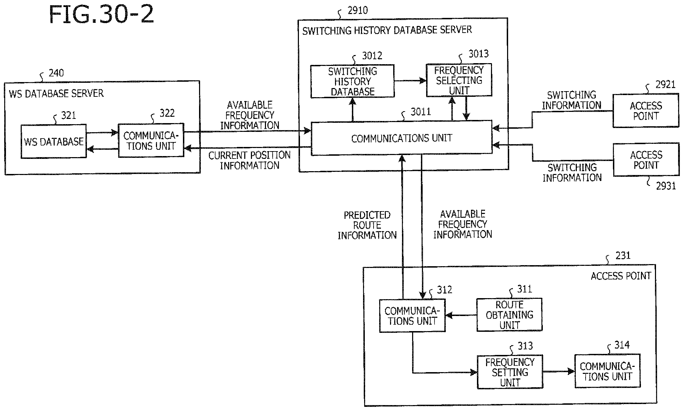

FIG. 30-2 is a diagram of an example of signal flow in the configuration of the communications system depicted in FIG. 30-1;

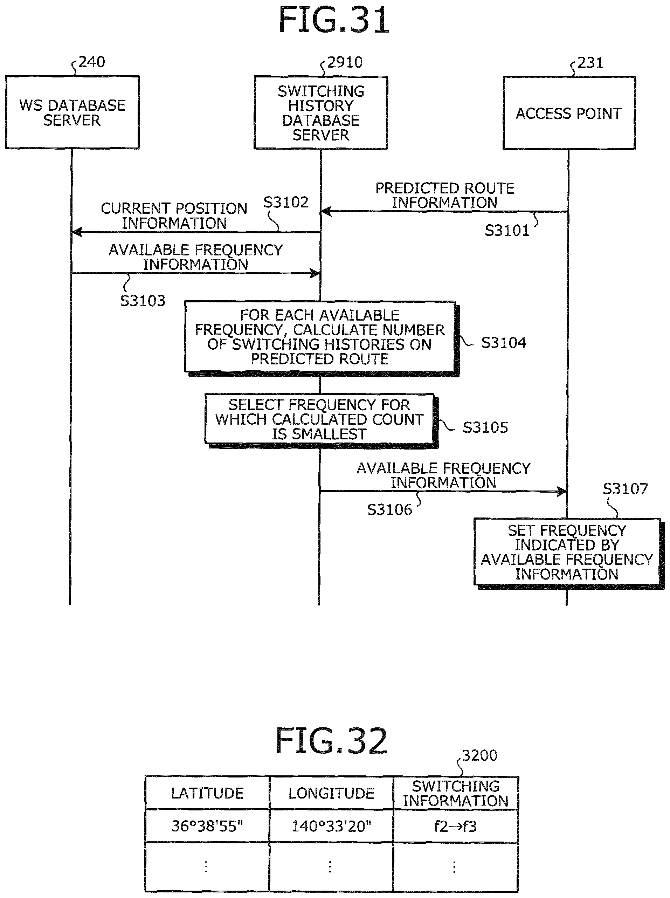

FIG. 31 is a sequence diagram of an operation example of the communications system depicted in FIG. 29;

FIG. 32 is a diagram of an example of switching information;

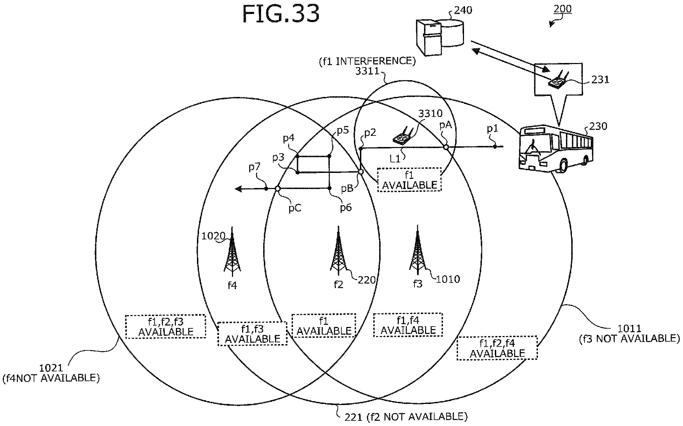

FIG. 33 is a diagram of an application example of the communications system according to a sixth embodiment;

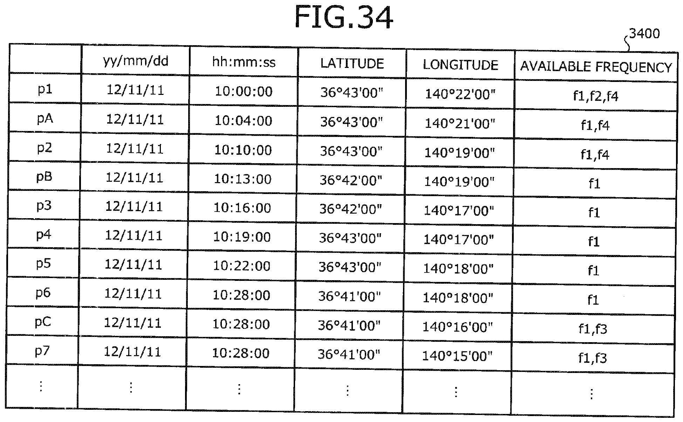

FIG. 34 is a diagram of an example of frequencies available at positions on a predicted route depicted in FIG. 33;

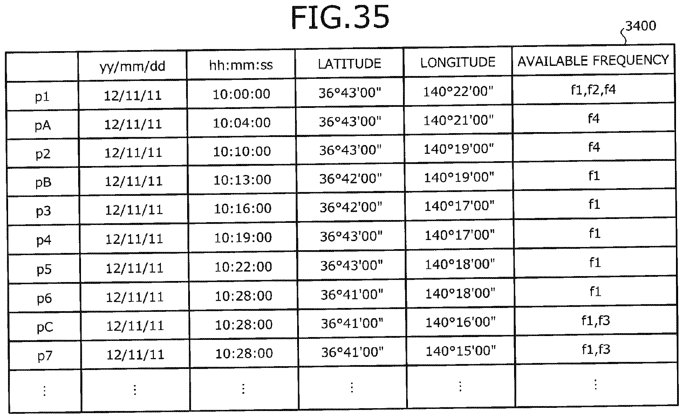

FIG. 35 is a diagram of an example of an updated table indicating available frequencies; and

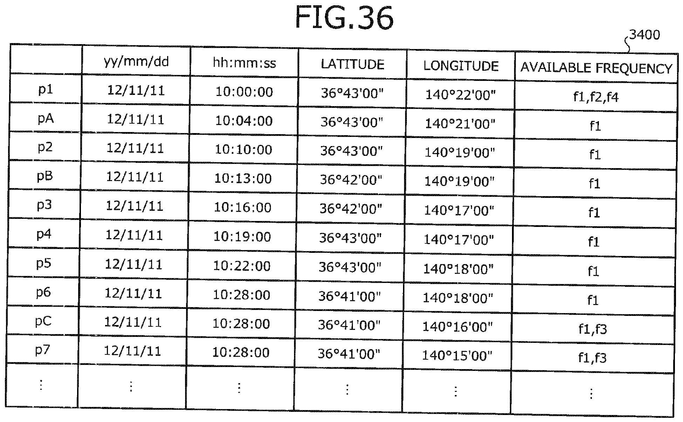

FIG. 36 is a diagram of another example of the updated table indicating available frequencies.

## BEST MODE(S) FOR CARRYING OUT THE INVENTION

Embodiments of a communications system, a communications control apparatus, a radio communications apparatus, and a communications method will be described in detail with reference to the accompanying drawings.

(First Embodiment)

(Communications system according to first embodiment)

FIG. 1-1 is a diagram of an example of a communications system according to a first embodiment. FIG. 1-2 is a diagram of an example of signal flow in the communications system depicted in FIG. 1-1. As depicted in FIGs. 1-1 and 1-2, a communications system 100 according to the first embodiment includes a radio communications apparatus 110 and a communications control apparatus 120. The radio communications apparatus 110 and the communications control apparatus 120 can communicate with each other. Various schemes of communication can be applied for the communication between the radio communications apparatus 110 and the communications control apparatus 120.

<Radio communications apparatus>

The radio communications apparatus 110 includes an obtaining unit 111, a transmitting unit 112, a receiving unit 113, and a communications unit 114. The obtaining unit 111 obtains route information indicating a position of the radio communications apparatus 110 (the apparatus itself) and a predicted route of the radio communications apparatus 110 in the future. The position of the radio communications apparatus 110 is, for example, an approximate position of the radio communications apparatus 110 at present. The obtaining unit 111 outputs the obtained route information to the transmitting unit 112. The transmitting unit 112 transmits to the communications control apparatus 120 (a radio communications apparatus), the route information output from the obtaining unit 111.

The receiving unit 113 receives frequency information transmitted from the communications control apparatus 120. The receiving unit 113 outputs the received frequency information to the communications unit 114. The communications unit 114 performs radio communication using a frequency indicated by the frequency information output from the receiving unit 113. For example, the communications unit 114 performs communication with a base station connected to a mobile communication network.

<Communications control apparatus>

The communications control apparatus 120 includes a receiving unit 121, an obtaining unit 122, a calculating unit 123, a selecting unit 124, and a transmitting unit 125. The receiving unit 121 receives route information transmitted from the radio communications apparatus 110. The receiving unit 121 outputs the received route information to the calculating unit 123.

The obtaining unit 122 obtains correspondence information for the position of the radio communications apparatus 110 and the frequencies available to the radio communications apparatus 110. For example, the correspondence information is stored in the memory of the communications control apparatus 120, and the obtaining unit 122 obtains the correspondence information from the memory of the communications control apparatus 120. The obtaining unit 122 may receive the correspondence information from a communication apparatus external to the communications control apparatus 120. The obtaining unit 122 outputs the obtained correspondence information to the calculating unit 123 and the selecting unit 124.

The calculating unit 123 first specifies frequencies available to the radio communications apparatus 110 at the position of the radio communications apparatus 110, based on the position of the radio communications apparatus 110 indicated by the route information output from the receiving unit 121 and based on the correspondence information output from the obtaining unit 122. For example, the calculating unit 123 searches the correspondence information for frequencies corresponding to the position of the radio communications apparatus 110 indicated by the route information, to thereby specify frequencies available to the radio communications apparatus 110 at the position of the radio communications apparatus 110.

For each of the specified frequencies, the calculating unit 123 calculates a predicted time taken for each frequency to become unavailable to the radio communications apparatus 110, based on the predicted route of the radio communications apparatus 110 indicated by the route information and based on the correspondence information. The calculating unit 123 notifies the selecting unit 124 of the specified frequencies and predicted time calculated for each of the specified frequencies.

Based on the predicted time notified by the calculating unit 123, the selecting unit 124 selects a frequency to be used by the radio communications apparatus 110 from among the frequencies notified by the calculating unit 123. For example, the selecting unit 124 preferentially selects from among the frequencies notified by the calculating unit 123, a frequency for which the predicted time notified by the calculating unit 123 is relatively longer. The selecting unit 124 outputs frequency information indicating the selected frequency to the transmitting unit 125. The transmitting unit 125 transmits to the radio communications apparatus 110, the frequency information output from the selecting unit 124.

According to the communications system 100 depicted in FIGs. 1-1 and 1-2, the communications control apparatus 120 enables the radio communications apparatus 110 to set a frequency for which the predicted time taken to become unavailable is relatively long among frequencies available to the radio communications apparatus 110 at the position of the radio communications apparatus 110. This results in reduced frequency switching by the radio communications apparatus 110.

(Selection of Plural Frequencies)

The selecting unit 124 of the communications control apparatus 120 notify the calculating unit 123 of frequencies selected as frequencies to be used by the radio communications apparatus 110 at the position of the radio communications apparatus 110. The calculating 123 specifies frequencies available to the radio communications apparatus 110 at a position where the frequencies notified by the selecting unit 124 become unavailable to the radio communications apparatus 110.

For each of the specified frequencies, the calculating unit 123 calculates a predicted time taken for the frequency to become unavailable to the radio communications apparatus 110 before the position is reached where the frequencies notified by the selecting unit 124 become unavailable to the radio communications apparatus 110. The calculating unit 123 notifies the selecting unit 124 of the specified frequencies and the predicted time calculated for each of the specified frequencies.

Based on the predicted times notified by the calculating unit 123, the selecting unit 124 selects from among the frequencies notified by the calculating unit 123, a frequency to be used by the radio communications apparatus 110 from the position where the already selected frequency becomes unavailable to the radio communications apparatus 110. The selecting unit 124 outputs to the transmitting unit 125, frequency information indicating a first frequency selected for the position of the radio communications apparatus 110 and a second frequency selected for a position where the first frequency becomes unavailable.

In this case, the frequency information has only to be information indicating the first frequency and the second frequency and indicating that the second frequency should be used after the first frequency. For example, assuming the first frequency and the second frequency to be F1 and F2, respectively, the frequency information can be list information such as {F1, F2}.

The communications unit 114 of the radio communications apparatus 110 performs radio communication using the first frequency indicated by the frequency information. When the first frequency becomes unavailable as a result of movement of the radio communications apparatus 110, the communications unit 114 performs radio communication using the second frequency indicated by the frequency information. This enables the radio communications apparatus 110 to set an available frequency and reduce frequency switching without again making an inquiry to the communications control apparatus 120 for available frequency when the frequency notified by the communications control apparatus 120 has become unavailable.

Although the case has been described where the communications control apparatus 120 issues a single frequency to be used when the frequency used at the position of the radio communications apparatus 110 has become unavailable, the communications control apparatus 120 may issue plural frequencies to be used when the frequency has become available.

(Frequency selection based on predicted movement distance for frequency switching to occur)

Although a case has been described where the frequency is selected based on the predicted time for the frequency to become unavailable to the radio communications apparatus 110, configuration may be such that the frequency is selected based on a predicted movement distance of the radio communications apparatus 110 for the frequency to become unavailable to the radio communications apparatus 110.

For example, for each of the specified frequencies, the calculating unit 123 of the communications control apparatus 120 calculates a predicted movement distance of the radio communications apparatus 110 for the frequency to become unavailable to the radio communications apparatus 110. The calculating unit 123 notifies the selecting unit 124 of the specified frequencies and predicted movement distances respectively calculated for the specified frequencies.

Based on the predicted movement distances notified by the calculating unit 123, the selecting unit 124 selects a frequency to be used by the radio communications apparatus 110 from among the frequencies notified by the calculating unit 123. For example, the selecting unit 124 preferentially selects a frequency for which the predicted movement distance notified by the calculating unit 123 is relatively long among the frequencies notified by the calculating unit 123.

Thus, the communications control apparatus 120 enables the radio communications apparatus 110 to set a frequency for which the predicted movement distance of the radio communications apparatus 110 to become unavailable is relatively long among the frequencies available to the radio communications apparatus 110 at the position of the radio communications apparatus 110. This results in reduced frequency switching.

(Application example of communications system according to first embodiment)

FIG. 2 is a diagram of a first application example of the communications system according to the first embodiment. The communications system 100 depicted in FIGs. 1-1 and 1-2 is applicable to a communications system 200 depicted in FIG. 2, for example. A bus vehicle 230 depicted in FIG. 2 is equipped with an access point 231. The radio communications apparatus 110 depicted in FIGs. 1-1 and 1-2 is applicable to the access point 231, for example. The communications control apparatus 120 depicted in FIGs. 1-1 and 1-2 is applicable to a WS database server 240, for example.

The access point 231 performs radio communication, for example, with communications terminals of passengers, etc., on the bus vehicle 230. The access point 231 has, as a backbone network, a wide area cellular network of 3rd generation (3G), long term evolution (LTE), etc., and performs radio communication with base stations of the backbone network using WS (frequencies). This enables the communications terminals of the passengers, etc., on the bus vehicle 230 to connect to the wide area cellular network by way of the access point 231.

The access point 231 can communicate with the WS database server 240. Various communication schemes such as LTE or 3G wide area cellular schemes, for example, are applicable to the communication between the access point 231 and the WS database server 240. The access point 231 transmits to the WS database server 240, predicted route information indicating a predicted route L1 of the bus vehicle 230. Since the access point 231 is equipped on the bus vehicle 230, the predicted route L1 is a predicted route of the access point 231.

The access point 231 receives from the WS database server 240, available frequency information indicating frequencies (WS) used by the access point 231. The access point 231 performs communications with the backbone network base stations using the frequencies indicated by the available frequency information received from the WS database server 240.

Frequencies available for radio communication by the access point 231 are assumed to be the frequencies f1 and f2 in the example depicted in FIG. 2. The frequencies f1 and f2 differ from each other. The frequency (WS) actually available to the access point 231 among the frequencies f1 and f2 differs depending on the position of the access point 231.

For example, a television station 210 communicates using the frequency f1 in an area 211. Therefore, the frequency f1 is not available to the access point 231 in the area 211. A television station 220 communicates using the frequency f2 in an area 221. Hence, the frequency f2 is not available to the access point 231 in the area 221.

Passage points p1 to p8 designate positions on the predicted route L1 of the access point 231. The passage point p1 is in neither the area 211 nor the area 221. Thus, the access point 231 can use the frequencies f1 and f2 at the passage point p1. The access points p2 to p7 are not in the area 211 but are in the area 221. Therefore, at the passage points p2 to p7, the access point 231 can use the frequency f1 but cannot use the frequency f2. The passage point p8 is in both the area 211 and the area 221. Hence, at the passage point p8, the access point 231 cannot use the frequencies f1 and f2.

A boundary point pA is a position on the predicted route L1 where the access point 231 enters the area 221. A boundary point pB is a position on the predicted route L1 where the access point 231 enters the area 211.

For example, when the access point 231 is located at the passage point p1, the frequencies f1 and f2 are available to the access point 231. If the access point 231 sets the frequency f2 at the passage point p1, the frequency f2 becomes unavailable at the boundary point pA and consequently, the access point 231 has to perform frequency switching. On the other hand, if the access point 231 sets the frequency f1 at the passage point p1, the frequency f1 is available until the boundary point pB and consequently, the access point 231 need not perform frequency switching until the boundary point pB.

Accordingly, the WS database server 240 causes the access point 231 to set the frequency f1 for which the predicted time for the frequency to become unavailable is longer among the frequencies f1 and f2 available to the access point 231 at the passage point p1. This enables a reduction of the frequency switching by the access point 231.

(Configuration of communications system)

FIG. 3-1 is a diagram of an example of configuration of the communications system depicted in FIG. 2. FIG. 3-2 is a diagram of an example of signal flow in the communications system depicted in FIG. 3-1. In FIGs. 3-1 and 3-2, parts identical to those depicted in FIG. 2 are designated by the same reference letters or numerals used in FIG. 2 and will not again be described.

<Configuration example of access point>

As depicted in FIGs. 3-1 and 3-2, the access point 231 includes, for example, a route obtaining unit 311, a communications unit 312, a frequency setting unit 313, and a communications unit 314. The route obtaining unit 311 obtains predicted route information (see, e.g., FIG. 5) indicating the position of the access point 231, and the predicted route L1 (see, e.g., FIG. 2) of the access point 231.

The memory of the access point 231 stores information indicating the predicted route, and the route obtaining unit 311 obtains from the memory of the access point 231, the information indicating the predicted route. The route obtaining unit 311 may obtain from a car navigation system, etc., of the bus vehicle 230, the information indicating the predicted route. The route obtaining unit 311 may use a global positioning system (GPS), for example, to obtain information indicating the position of the access point 231. The route obtaining unit 311 outputs the obtained predicted route information to the communications unit 312.

The communications unit 312 performs radio communication with the WS database server 240. For example, the communications unit 312 transmits to the WS database server 240, the predicted route information output from the route obtaining unit 311. The communications unit 312 receives available frequency information transmitted from the WS database server 240. The communications unit 312 outputs the received available frequency information to the frequency setting unit 313.

The frequency setting unit 313 sets the frequency used for radio communication by the communications unit 314 to a frequency indicated by the available frequency information output from the route obtaining unit 311. The communications unit 314 performs radio communication using the frequency set by the frequency setting unit 313. For example, the communications unit 314 relays, via radio communication, communication between communications terminals on the bus vehicle 230 and base stations. The communications units 312 and 314 may be realized by a single communications unit.

The obtaining unit 111 depicted in FIGs. 1-1 and 1-2 can be realized, for example, by the route obtaining unit 311. The transmitting unit 112 and the receiving unit 113 depicted in FIGs. 1-1 and 1-2 can be realized, for example, by the communications unit 312. The communications unit 114 depicted in FIGs. 1-1 and 1-2 can be realized, for example, by the frequency setting unit 313 and the communications unit 314.

<Configuration example of WS database server>

As depicted in FIGs. 3-1 and 3-2, the WS database server 240 includes a WS database 321, a communications unit 322, and a frequency selecting unit 323. The WS database 321 stores correspondence information associating the positions of the access point 231 with the frequencies available to the access point 231.

The communications unit 322 performs radio communication with the access point 231. For example, the communications unit 322 receives predicted route information transmitted from the access point 231. The communications unit 322 outputs the received predicted route information to the frequency selecting unit 323. The communications unit 322 transmits to the access point 231, available frequency information output from the frequency selecting unit 323.

The frequency selecting unit 323 specifies, as available frequencies of the access point 231, frequencies available to the access point 231 at the current position of the access point 231. For example, the frequency selecting unit 323 specifies the available frequencies of the access point 231, based on the current position of the access point 231 indicated by the predicted route information output from the communications unit 322 and based on the correspondence information stored in the WS database 321.

For each of the specified available frequencies, the frequency selecting unit 323 calculates a predicted time for the next frequency switching by the access point 231 if the access point 231 were to set the frequency. The frequency selecting unit 323 then selects, as the frequency to be used by the access point 231, an available frequency for which the calculated predicted time is greatest among the specified available frequencies. The frequency selecting unit 323 outputs to the communications unit 322, the available frequency information indicating the selected frequency to be used.

The receiving unit 121 and the transmitting unit 125 depicted in FIGs. 1-1 and 1-2 can be realized for example by the communications unit 322. The obtaining unit 122 depicted in FIGs. 1-1 and 1-2 can be realized for example by the WS database 321. The calculating unit 123 and the selecting unit 124 depicted in FIGs. 1-1 and 1-2 can be realized for example by the frequency selecting unit 323.

(Hardware configuration of access point)

FIG. 3-3 is a diagram of an example of hardware configuration of the access point. The access point 231 depicted in FIGs. 3-1 and 3-2, for example, can be realized by an information processing apparatus 330 depicted in FIG. 3-3. The information processing apparatus 330 includes a CPU 331, memory 332, a user interface 333, a radio communications interface 334, and a GPS module 335. The CPU 331, the memory 332, the user interface 333, the radio communications interface 334, and the GPS module 335 are connected by a bus 339.

The CPU 331 (central processing unit) governs overall control of the information processing apparatus 330. Further, the information processing apparatus 330 may include the CPU 331 in plural. The memory 332, for example, includes main memory and auxiliary memory. The main memory, for example, is RAM (random access memory) and is used as a work area of the CPU 331. The auxiliary memory, for example, is non-volatile memory such as a magnetic disk and flash memory. The auxiliary memory stores various types of programs that cause the information processing apparatus 330 to operate. Programs stored by the auxiliary memory are loaded to the main memory and are executed by the CPU 331.

The user interface 333, for example, includes an input device that receives operational input from the user and an output device that outputs information to the user. The input device, for example, can be realized by a key (e.g., a keyboard) or a remote controller. The output device, for example, can be realized by a display or a speaker. Further, the input device and the output device may be realized by a touch panel and the like. The user interface 333 is controlled by the CPU 331.

The radio communications interface 334, for example, is a communications interface that performs radio communication with external apparatuses of the information processing apparatus 330. The radio communications interface 334 is controlled by the CPU 331.

The GPS module 335 is a module that obtains information indicating the current position of the information processing apparatus 330. The GPS module 335 is controlled by the CPU 331.

The route obtaining unit 311 depicted in FIGs. 3-1 and 3-2, for example, can be realized by the CPU 331, the memory 332, and the GPS module 335. The communications units 312 and 314 depicted in FIGs. 3-1 and 3-2, for example, can be realized by the CPU 331 and the radio communications interface 334. The frequency setting unit 313 depicted in FIGs. 3-1 and 3-2, for example, can be realized by the CPU 331.

(Hardware configuration of WS database server)

FIG. 3-4 is a diagram of an example of hardware configuration of the WS database server. The WS database server 240 depicted in FIGs. 3-1 and 3-2, for example, can be realized by the information processing apparatus 340 depicted in FIG. 3-4. The information processing apparatus 340 includes a CPU 341, memory 342, user interface 343, a wire-based communications interface 344, and a radio communications interface 345. The CPU 341, the memory 342, the user interface 343, the wire-based communications interface 344, and the radio communications interface 345 are connected by a bus 349.

The CPU 341 governs overall control of the information processing apparatus 340. Further, the information processing apparatus 340 may include the CPU 341 in plural. The memory 342, for example, includes main memory and auxiliary memory. The main memory, for example, is RAM and is used as a work area of the CPU 341. The auxiliary memory, for example, is non-volatile memory such as a magnetic disk, an optical disk, and flash memory. The auxiliary memory stores various types of programs that cause the information processing apparatus 340 to operate. Programs stored by the auxiliary memory are loaded to the main memory and executed by the CPU 341.

The user interface 343, for example, includes an input device that receives operational input from the user and an output device that outputs information to the user. The input device, for example, can be realized by a key (e.g., a keyboard) or a remote controller. The output device, for example, can be realized by a display or a speaker. Further, the input device and the output device may be realized by a touch panel and the like. The user interface 343 is controlled by the CPU 341.

The wire-based communications interface 344, for example, is a communications interface that communicates with external apparatuses (e.g., higher order system) of the information processing apparatus 340 by cable. The wire-based communications interface 344 is controlled by the CPU 341.

The radio communications interface 345, for example, is a communications interface that performs radio communication with external apparatuses of the information processing apparatus 340. The radio communications interface 345 is controlled by the CPU 341.

The communications unit 322 depicted in FIGs. 3-1 and 3-2, for example, can be realized by the CPU 341 and the radio communications interface 345. The WS database 321 depicted in FIGs. 3-1 and 3-2, for example, can be realized by the memory 342. The frequency selecting unit 323 depicted in FIGs. 3-1 and 3-2, for example, can be realized by the CPU 341.

(Operation example of communications system)

FIG. 4 is a sequence diagram of an operation example of the communications system depicted in FIG. 2. The communications system 200 depicted in FIG. 2 operates, for example, as indicated by the steps depicted in FIG. 4. First, the access point 231 transmits predicted route information of the access point 231 to the WS database server 240 (step S401).

The WS database server 240 then specifies available frequencies corresponding to the current position of the access point 231, based on the predicted route information transmitted at step S401 and based on the correspondence information (step S402). For each of the available frequencies specified at step S402, the WS database server 240 then calculates a predicted time for the next frequency switching by the access point 230 to occur if the WS database server 240 causes the access point 231 to set the available frequency (step S403).

The WS database server 240 selects from among the available frequencies specified at step S402, the frequency for which the predicted time calculated at step S403 is greatest (step S404). The WS database server 240 transmits available frequency information indicating the frequency selected at step S404 to the access point 231 (step S405).

The access point 231 sets the frequency indicated by the available frequency information transmitted at step S405, as a frequency to be used for radio communication by the access point 231 (step S406), and terminates a series of the operations.

The above operations enable the access point 231 to set a frequency for which the predicted time of becoming unavailable is longer among frequencies available to the access point 231 at the current position of the access point 231. As a result, frequency switching by the access point 231 can be reduced.

The operations depicted in FIG. 4 are executed, for example, at the time of powering on of the access point 231. The timing at which the operations depicted in FIG. 4 are executed is not limited hereto. For example, the operations depicted in FIG. 4 may be executed every time the frequency being used by the access point 231 becomes unavailable as a result of movement of the access point 231. This can reduce frequency switching, not only at the time of powering on.

The operations depicted in FIG. 4 may be executed every time the predicted route L1 of the access point 231 changes. The operations depicted in FIG. 4 may be executed periodically. This enables the frequency switching by the access point 231 to be reduced, irrespective of a change in the predicted route L1 of the access point 231 due to rerouting, etc.

(Predicted route information transmitted by access point)

FIG. 5 is a diagram of an example of predicted route information transmitted by an access point. The access point 231 transmits to the WS database server 240, for example, predicted route information 500 depicted in FIG. 5 as the predicted route information. In the predicted route information 500, date (yy/mm/dd), time (hh:mm:ss), latitude, and longitude are correlated with one another for each passage point (passage points p1 to p8, ...) on the predicted route L1.

For example, the predicted route information 500 indicates that the access point 231 is scheduled to pass through the passage point p1 at 10:00:00 on 12/11/11, latitude (36 [degrees], 43'00"), and longitude (140 [degrees], 22'00"). In this manner, the predicted route information 500 can be position information arranged in time series.

The predicted route information 500 is, for example, information indicating positions on the predicted route L1 and predicted times of passing through the positions on the predicted route L1. This enables the WS database server 240 to calculate a predicted time and a predicted movement distance for a given frequency to become unavailable to the access point 231. When the WS database server 240 calculates the predicted movement distance for the given frequency to become unavailable to the access point 231, the predicted route information 500 may omit the hour (date and time).

(Correspondence information stored in WS database)

FIG. 6 is a diagram of an example of correspondence information stored in a WS database. The WS database server 240 stores, for example, correspondence information 600 depicted in FIG. 6. In the correspondence information 600, frequencies available to the access point 231 are correlated with combinations of the latitude and the longitude.

For example, the correspondence information 600 indicates that the frequency f1 is a frequency available to the access point 231 at the position of latitude (36 [degrees], 43') and longitude (140 [degrees], 22').

(Frequencies available at positions on predicted route)

FIG. 7 is a diagram of an example of frequencies available at positions on the predicted route depicted in FIG. 2. The frequency selecting unit 323 of the WS database server 240 creates a table 700 depicted in FIG. 7 through calculations based on predicted route information (see, e.g., FIG. 5) output from the communications unit 322 and based on correspondence information (see, e.g., FIG. 6) stored in the WS database 321.

In the table 700, frequencies available to the access point 231 are correlated with each passage point of the access point 231 based on the predicted route indicated by the predicted route information. The passage points of the table 700 include, in addition to the passage points p1 to p8, ..., indicated by the predicted route information, passage points supplemented based on the passage points p1 to p8, ....

The table 700 includes distances between the passage points of the access point 231, correlated with the passage points. The distances between the passage points can be calculated based on the latitudes and longitudes of the passage points.

The approximate current time is assumed to be 10:00:00 on 12/11/11. In this case, the current position of the access point 231 is latitude (36 [degrees], 43'00") and longitude (140 [degrees], 22'00"). The frequency selecting unit 323 specifies the available frequencies f1 and f2 corresponding to the current position of the access point 23, based on the created table 700.

For each of the specified frequencies f1 and f2, the frequency selecting unit 323 calculates based on the table 700, a predicted time for the next frequency switching to occur by the access point 231 if the access point 231 sets the frequency.

In the example depicted in FIG. 7, if the frequency f1 is set in the access point 231, the frequency f1 remains available until 10:34:00 of the same date and consequently, the predicted time for the frequency switching to occur by the access point 231 is 34 minutes. If the frequency f2 is set in the access point 231, the frequency f2 is available until 10:07:00 of the same date and consequently, the predicted time for the frequency switching to occur by the access point 231 is 7 minutes.

The frequency selecting unit 323 thus selects, as the frequency to be used by the access point 231, the frequency f1 for which the predicted time for the frequency switching to occur by the access point 231 is longest among the specified frequencies f1 and f2.

(Selection of frequency based on movement distance for frequency switching to occur)

Although the example depicted in FIG. 2 has been described in a case where the frequency to be used is selected based on the predicted time for the frequency switching to occur, configuration may be such that the frequency to be used is selected based on the predicted movement distance of the access point 231 for the frequency switching to occur.

For example, for each specified available frequency, the frequency selecting unit 323 calculates a predicted movement distance of the access point 231 for the next frequency switching to occur by the access point 231 if the access point 231 sets the available frequency. The frequency selecting unit 323 then selects, as the frequency to be used by the access point 231, the available frequency for which the calculated predicted movement distance is greatest among the specified available frequencies.

In this case, if the frequency f1 is set in the access point 231 in the example depicted in FIG. 7, the frequency f1 remains available until the position of latitude (36 [degrees], 41'00") and longitude (140 [degrees],16'00"). Accordingly, the predicted movement distance of the access point 231 for the frequency switching to by in the access point 231 is 3+1.5+1.5+1.5+1.5+1.5+3+3=16.5 [km].

If the frequency f2 is set in the access point 231, the frequency f2 is available until the position of latitude (36 [degrees], 43'00") and longitude (140 [degrees], 20'00"). Accordingly, the predicted movement distance of the access point 231 for the frequency switching to occur in the access point 231 is 3 [km].

The frequency selecting unit 323 thus selects, as the frequency used by the access point 231, the frequency f1 for which the predicted movement distance for the frequency switching to occur by the access point 231 is longest among the specified frequencies f1 and f2.

(Second application example of communications system according to first embodiment)

FIG. 8 is a diagram of a second application example of the communications system according to the first embodiment. In FIG. 8, parts identical to those depicted in FIG. 2 are designated by the same reference letters or numerals used in FIG. 2 and will not again be described. As depicted in FIG. 8, the communications system 200 includes a frequency management apparatus 810, in addition to the configuration depicted in FIG. 2. In this case, the communications control apparatus 120 depicted in FIGs. 1-1 and 1-2 are applicable to the frequency management apparatus 810, for example.

The frequency management apparatus 810 can communicate with the access point 231 and with the WS database server 240. Radio communication, for example, can be used for communication between the frequency management apparatus 810 and the access point 231. Wire-based communication, for example, can be used for communication between the frequency management apparatus 810 and the access point 240. In this case, direct communication is not necessarily required between the WS database server 240 and the access point 231.

The access point 231 transmits to the frequency management apparatus 810, predicted route information indicating the predicted route L1. The access point 231 receives from the frequency management apparatus 810, available frequency information indicating frequencies (WS) to be used by the access point 231. The access point 231 performs radio communication with base stations of the backbone network using frequencies indicated by the available frequency information received from the frequency management apparatus 810.

The frequency management apparatus 810 receives from the WS database server 240, information indicating the WS available to the access point 231. The frequency management apparatus 810 transmits to the WS database server 240, position information indicating the position of the access point 231 indicated by the correspondence information 600 received from the access point 231.

Such a function of selecting the frequencies to be used by the access point 231 notifying the access point 231 of them may be realized by a communications control apparatus (e.g., frequency management apparatus 810) different from the WS database server 240. The WS database server 240 and the frequency management apparatus 810 may be managed by respectively different business operators.

(Configuration of communications system)

FIG. 9-1 is a diagram of an example of configuration of the communications system depicted in FIG. 8. FIG. 9-2 is a diagram of an example of signal flow in the communications system depicted in FIG. 9-1. In FIGs. 9-1 and 9-2, parts identical to those depicted in FIGs. 3-1 and 3-2 are designated by the same reference letters or numerals used in FIGs. 3-1 and 3-2 and will not again be described.

As depicted in FIGs. 9-1 and 9-2, the WS database server 240 depicted in FIG. 8 includes a communications unit 911 and the WS database 321. The communications unit 911 transmits correspondence information stored in the WS database 321 to the frequency management apparatus 810. Wire-based communication, for example, can be used for communication between the communications unit 911 and the frequency management apparatus 810.

The frequency management apparatus 810 includes a communications unit 921, the frequency selecting unit 323, and the communications unit 322. The communications unit 921 receives the correspondence information transmitted from the WS database server 240. The communications unit 921 outputs the received correspondence information to the frequency selecting unit 323.

The frequency selecting unit 323 specifies available frequencies of the access point 231, based on the predicted route information output from the communications unit 322 and based on the correspondence information output from the communications unit 921. For each of the specified available frequencies, the frequency selecting unit 323 calculates based on the correspondence information output from the communications unit 921, a predicted time (or a predicted movement distance) for the next frequency switching to occur by the access point 231 if the access point 231 sets the frequency.

(Hardware configuration of frequency management apparatus)

The frequency management apparatus 810 depicted in FIGs. 9-1 and 9-2 can be realized, for example, by the information processing apparatus 340 depicted in FIG. 3-4. In this case, the communications unit 322 depicted in FIGs. 9-1 and 9-2 can be realized for example by the CPU 341 and the radio communications interface 345.

The frequency selecting unit 323 depicted in FIGs. 9-1 and 9-2 can be realized, for example, by the CPU 341. The communications unit 921 depicted in FIGs. 9-1 and 9-2 can be realized, for example, by the CPU 341 and the wire-based communications interface 344.

(Hardware configuration of WS database sever)

The WS database server 240 depicted in FIGs. 9-1 and 9-2 can be realized, for example, by the information processing apparatus 340 depicted in FIG. 3-4. In this case, however, the radio communications interface 345 depicted in FIG. 3-4 may be omitted.

The communications unit 911 depicted in FIGs. 9-1 and 9-2 can be realized, for example, by the CPU 341 and the wire-based communications interface 344. The WS database 321 depicted in FIGs. 9-1 and 9-2 can be realized, for example, by the memory 342.

(Third application example of communications system according to first embodiment)

FIG. 10 is a diagram of a third application example of the communications system according to the first embodiment. In FIG. 10, parts identical to those depicted in FIG. 2 are designated by the same reference letters or numerals used in FIG. 2 and will not again be described. The example depicted in FIG. 10 assumes that the frequencies available for radio communication by the access point 231 are frequencies f1 to f4. The frequencies f1 to f4 are frequencies differing from one another.

The access point 231 can perform radio communication using plural frequencies. Carrier aggregation in LTE or channel bonding in WiFi can be used for radio communication using plural frequencies, for example.

A television station 1010 communicates using the frequency f3 in an area 1021. Therefore, the frequency f3 is unavailable to the access point 231 in the area 1011. A television station 1020 communicates using the frequency f4 in an area 1021. Therefore, the frequency f4 is unavailable to the access point 231 in the area 1021.

In the example depicted in FIG. 10, the passage point p1 is not in the areas 221 and 1021 but is in the area 1011. Thus, the frequencies f1 and f2, and f4 are available to the access point 231 at the passage point p1. The passage points p2 to p7 are in the areas 221, 1011, and 1021. Thus, the frequency f1 is available to the access point 231 at the passage points p2 to p7. The passage point p8 is not in the area 1011 but is in the areas 221 and 1021. Therefore, the frequencies f1 and f3 are available to the access point 231 at the passage point p8.

The boundary point pA is a position on the predicted route L1 where the access point 231 enters the area 221. The boundary point pB is a position on the predicted route L1 where the access point 231 enters the area 1021. A boundary point pC is a position on the predicted route L1 where the access point 231 leaves the 1011.

For example, if the access point 231 is located at the passage point p1, frequencies available to the access point 231 are the frequencies f1 and f2, and f4. If the access point 231 sets the frequency f1 at the passage point p1, no frequency switching by the access point 231 occurs. If the access point 231 sets the frequency f2 at the passage point p1, the frequency f2 becomes unavailable at the boundary point pA resulting in frequency switching by the access point 231. If the access point 231 sets the frequency f4 at the passage point p1, the frequency f4 becomes unavailable at the boundary point pB resulting in frequency switching by the access point 231.

The WS database server 240 thus causes the access point 231 to set the frequency for which the predicted time for the frequency to become unavailable is longest among the frequencies f1 and f2, and f4 available to the access point 231 at the passage point p1. For example, if the access point 231 performs radio communication using two frequencies at the same time, the WS database server 240 causes the access point 231 to set the two frequencies for which the predicted times to become unavailable are longest. As a result, frequency switching by the access point 231 can be reduced.

(Available frequency at positions on predicted route)

FIG. 11 is a diagram of an example of frequencies available at positions on the predicted route depicted in FIG. 10. The frequency selecting unit 323 of the WS database server 240 depicted in FIG. 10 creates, for example, a table 1100 depicted in FIG. 11 through calculations based on the predicted route information output from the communications unit 322 and based on the correspondence information stored in the WS database 321.

In the table 1100, similar to the table 700 depicted in FIG. 7, frequencies available to the access point 231 are correlated with each passage point of the access point 231 based on the predicted route indicated by the predicted route information.

In the example depicted in FIG. 11, if the frequency f1 is set in the access point 231, the frequency f1 remains available until the passage point p8 at the terminal end of the predicted route L1, resulting in the longest predicted time for frequency switching to occur by the access point 231. If the frequency f2 is set in the access point 231, the frequency f2 is available until 10:04:00 of the same date, and the predicted time for frequency switching to occur by the access point 231 is 4 min. If the frequency f4 is set in the access point 231, the frequency f4 is available until 10:07:00 of the same date, and the predicted time for frequency switching to occur by the access point 231 is 7 min.

The frequency selecting unit 323, therefore, selects, as the frequencies to be used by the access point 231, the two frequencies f1 and f4 for which the longest predicted times for frequency switching to occur by the access point 231 are longest among the specified frequencies f1 and f2, and f4.

In this manner, according to the first embodiment, the radio communications apparatus can set a frequency for which the predicted time for the frequency to become unavailable is relatively long among the frequencies available to the radio communications apparatus at the position of the radio communications apparatus. Alternatively, the radio communications apparatus can set a frequency for which the predicted movement distance to become unavailable, among frequencies available to the radio communications apparatus at the position of the radio communications apparatus. As a result, the number of times of frequency switching can be reduced in the radio communications apparatus.

(Second embodiment)

Parts of a second embodiment differing from the first embodiment will be described.

(Communications system according to second embodiment)

FIG. 12-1 is a diagram of an example of the communications system according to a second embodiment. FIG. 12-2 is a diagram of an example of signal flow in the communications system depicted in FIG. 12-1. In FIGs. 12-1 and 12-2, parts identical to those depicted in FIGs. 1-1 and 1-2 are designated by the same reference letters or numerals used in FIGs. 1-1 and 1-2 and will not again be described.

<Radio communications apparatus>

The radio communications apparatus 110 according to the second embodiment includes the obtaining unit 111, the transmitting unit 112, the receiving unit 113, a calculating unit 1211, the selecting unit 124, and the communications unit 114. The obtaining unit 111 obtains position information indicating the position of the radio communications apparatus 110. The obtaining unit 111 then outputs the obtained position information to the transmitting unit 112.

The obtaining unit 111 obtains route information indicating a predicted route of the radio communications apparatus 110 in the future. Based on the obtained route information, the obtaining unit 111 then obtains history information indicating a history of switching frequencies used for radio communication by the radio communications apparatus 110, at positions on the predicted route of the radio communications apparatus 110. The obtaining unit 111 outputs the obtained history information to the calculating unit 1211.

The transmitting unit 112 transmits to the communications control apparatus 120 (radio communications apparatus), the position information output from the obtaining unit 111. The receiving unit 113 receives frequency information transmitted from the communications control apparatus 120. The receiving unit 113 then outputs the received frequency information to the calculating unit 1211.

For each of the frequencies indicated by the frequency information output from the receiving unit 113, the calculating unit 1211 calculates a predicted time for the frequency to become unavailable to the radio communications apparatus 110, based on the history information output from the obtaining unit 111. The calculating unit 1211 then notifies the selecting unit 124 of the frequencies indicated by the frequency information and the predicted time calculated for each frequency indicated by the frequency information.

Based on the predicted time notified by the calculating unit 1211, the selecting unit 124 selects a frequency to be used by the radio communications apparatus 110 among the frequencies notified by the calculating unit 1211. The selecting unit 124 then notifies the communications unit 114 of the selected frequency. The communications unit 114 performs radio communication using the frequency notified by the selecting unit 124.

<Communications control apparatus>

The communications control apparatus 120 includes the receiving unit 121, a specifying unit 1221, the obtaining unit 122, and the transmitting unit 125. The receiving unit 121 receives position information transmitted from the radio communications apparatus 110. The receiving unit 121 then outputs the received position information to the specifying unit 1221. The obtaining unit 122 outputs obtained correspondence information to the specifying unit 1221.

The specifying unit 1221 specifies frequencies available to the radio communications apparatus 110 at the position of the radio communications apparatus 110, based on the position indicated by the position information output from the receiving unit 121 and based on the correspondence information output from the obtaining unit 122. For example, the specifying unit 1221 searches the correspondence information for frequencies corresponding to the position of the radio communications apparatus 110 indicated by the position information, to thereby specify the frequencies available to the radio communications apparatus 110 at the position of the radio communications apparatus 110.

The specifying unit 1221 then outputs to the transmitting unit 125, frequency information indicating the specified frequencies. The transmitting unit 125 transmits to the radio communications apparatus 110, the frequency information output from the specifying unit 1221.

The communications system 100 depicted in FIGs. 12-1 and 12-2 enables the radio communications apparatus 110 to set a frequency for which the predicted time for the frequency to become unavailable is relatively long among the frequencies available to the radio communications apparatus 110 at the position of the radio communications apparatus 110. As a result, frequency switching by the radio communications apparatus 110 can be reduced.

(Frequency selection based on predicted movement distance for frequency switching to occur)

Although a case has been described where the frequency is selected based on the predicted time for the frequency to become unavailable to the radio communications apparatus 110, configuration may be such that the frequency is selected based on a predicted movement distance of the radio communications apparatus 110 for the frequency to become unavailable to the radio communications apparatus 110.

For example, for each of the specified frequencies, the calculating unit 1211 of the communications apparatus 110 calculates a predicted movement distance of the radio communications apparatus 110 for the frequency to become unavailable to the radio communications apparatus 110. The calculating unit 1211 notifies the selecting unit 124 of the frequencies indicated by the frequency information and predicted movement distances respectively calculated for the frequencies indicated by the frequency information.

Based on the predicted movement distances notified by the calculating unit 1211, the selecting unit 124 selects a frequency to be used by the radio communications apparatus 110 from among the frequencies notified by the calculating unit 1211. For example, the selecting unit 124 preferentially selects a frequency for which the predicted movement distance notified by the calculating unit 1211 is relatively long among the frequencies notified by the calculating unit 1211.

Thus, the communications apparatus 110 enables the radio communications apparatus 110 to set a frequency for which the predicted movement distance of the radio communications apparatus 110 to become unavailable is relatively long among the frequencies available to the radio communications apparatus 110 at the position of the radio communications apparatus 110. This results in reduced frequency switching at the communications apparatus 110.

(Application example of communications system according to second embodiment)

FIG. 13 is a diagram of an application example of the communications system according to the second embodiment. In FIG. 13, parts identical to those depicted in FIG. 2 are designated by the same reference letters or numerals used in FIG. 2 and will not again be described. Switching histories 1301 to 1304 depicted in FIG. 13 are histories that respectively indicate a position where frequency switching occurred by the access point 231 in the past and the frequencies before and after the switching. For example, the switching history 1301 indicates that switching from frequency f2 to frequency f3 occurred at the boundary point pA in the past. The access point 231 obtains the switching histories 1301 and 1302 corresponding to positions on the predicted route L1 of the access point 231, among the switching histories 1301 to 1304.

For example, when the access point 231 is located at the passage point p1, the frequencies f1 and f2 are assumed to be available to the access point 231. If the access point 231 sets the frequency f2 at the passage point p1, the frequency f2 becomes unavailable at the boundary point pA and consequently, the access point 231 has to perform frequency switching. On the other hand, if the access point 231 sets the frequency f1 at the passage point p1, the frequency f1 is available until the boundary point pB and consequently, the access point 231 need not perform frequency switching until the boundary point pB.

Accordingly, the WS database server 240 causes the access point 231 to set the frequency f1 for which the predicted time for the frequency to become unavailable is longer among the frequencies f1 and f2 available to the access point 231 at the passage point p1. This enables a reduction of the frequency switching by the access point 231.

(Configuration of communications system)

FIG. 14-1 is a diagram of an example of configuration of the communications system depicted in FIG. 13. FIG. 14-2 is a diagram of an example of signal flow in the communications system depicted in FIG. 14-1. In FIGs. 14-1 and 14-2, parts identical to those depicted in FIGs. 3-1 and 3-2 are designated by the same reference letters or numerals used in FIGs. 3-1 and 3-2 and will not again be described.

<Configuration example of access point>

As depicted in FIGs. 14-1 and 14-2, the access point 231 includes for example the route obtaining unit 311, the communications unit 312, a switching history storage unit 1411, a frequency selecting unit 1412, and the communications unit 314. The route obtaining unit 311 obtains current position information indicating the current position of the access point 231. The route obtaining unit 311 outputs the obtained current position information to the communications unit 312. The route obtaining unit 311 obtains predicted route information (see, for example, FIG. 5) of the access point 231. The route obtaining unit 311 then outputs the obtained predicted route information to the frequency selecting unit 1412.

The communications unit 312 transmits to the WS database server 240, the current position information output from the route obtaining unit 311. The communications unit 312 receives available frequency information transmitted from the WS database server 240. The communications unit then outputs the received available frequency information to the frequency selecting unit 1412.

The switching history storage unit 1411 stores history information of the switching of frequencies used for radio communication by the access point 231. The frequency selecting unit 1412 selects a frequency to be used by the access point 231, based on the predicted route information output from the route obtaining unit 311, the history information stored in the switching history storage unit 1411, and the available frequency information output from the communications unit 312. The frequency selecting unit 1412 then sets the selected frequency as a frequency to be used for radio communication by the communications unit 314. The communications unit 314 performs radio communication using the frequencies set by the frequency selecting unit 1412.

The obtaining unit 111 depicted in FIGs. 12-1 and 12-2 can be realized, for example, by the route obtaining unit 311. The transmitting unit 112 and the receiving unit 113 depicted in FIGs. 12-1 and 12-2 can be realized, for example, by the communications unit 312. The calculating unit 1211 depicted in FIGs. 12-1 and 12-2 can be realized, for example, by the frequency selecting unit 1412. The communications unit 114 depicted in FIGs. 12-1 and 12-2 can be realized, for example, by the communications unit 314.

<Configuration example of WS database server>

As depicted in FIGs. 14-1 and 14-2, the WS database server 240 includes the communications unit 322 and the WS database 321. The communications unit 322 receives current position information transmitted from the access point 231. The communications unit 322 then outputs the received current position information to the WS database 321. The communications unit 322 transmits to the access point 231, available frequency information output from the WS database 321.

The WS database 321 specifies in the stored correspondence information, frequencies corresponding to a position indicated by the current position information output from the access point 231, to output to the communications unit 322, available frequency information indicating the specified frequencies.

The receiving unit 121 and the transmitting unit 125 depicted in FIGs. 12-1 and 12-2 can be realized for example by the communications unit 322. The specifying unit 1221 and the obtaining unit 122 depicted in FIGs. 12-1 and 12-2 can be realized for example by the WS database 321.

(Operation example of communications system)

FIG. 15 is a sequence diagram of an operation example of the communications system depicted in FIG. 13. The communications system 200 depicted in FIG. 13 operates, for example, as indicated by the steps depicted in FIG. 15. First, the access point 231 transmits current position information indicating the current position of the access point 231 to the WS database server 240 (step S1501).

The WS database server 240 then transmits to the access point 231, available frequency information indicating frequencies available to the access point 231 at the position indicated by the current position information transmitted at step S1501 (step S1502).

The access point 231 obtains predicted route information and switching history information of the access point 231 (step S1503). The access point 231 calculates for each available frequency indicated by the available frequency information transmitted at step S1502, a predicted time for frequency switching to occur by the access point 231 (step S1504).

The access point 231 then selects from among the available frequencies indicated by the available frequency information transmitted at step S1502, a frequency for which the predicted time calculated at step S1504 is longest (step S1505). The access point 231 sets the frequency selected at step S1505 as the frequency for use in radio communication (step S1506), and terminates a series of operations.

The above operations enable the access point 231 to set a frequency for which the predicted time of becoming unavailable is longer among frequencies available to the access point 231 at the current position of the access point 231. As a result, frequency switching by the access point 231 can be reduced.

The operations depicted in FIG. 15 are executed, for example, at the time of powering on of the access point 231. The timing at which the operations depicted in FIG. 15 are executed is not limited hereto. For example, the operations depicted in FIG. 15 may be executed every time the frequency being used by the access point 231 becomes unavailable as a result of movement of the access point 231. This can reduce frequency switching, not only at the time of powering on.

The operations depicted in FIG. 15 may be executed every time the predicted route L1 of the access point 231 changes. The operations depicted in FIG. 15 may be executed periodically. This enables the frequency switching by the access point 231 to be reduced, irrespective of a change in the predicted route L1 of the access point 231 due to rerouting, etc.

(Available frequency information)

FIG. 16 is a diagram of an example of available frequency information. The WS database server 240 transmits, for example, available frequency information 1600 depicted in FIG. 16 to the access point 231. In the available frequency information 1600 are arranged frequencies (f1, f2, ...) available to the access point 231 at the current position of the access point 231. The access point 231 selects from among frequencies arranged in the available frequency information 1600, a frequency for use in radio communications.

(Switching history information)

FIG. 17 is a diagram of an example of switching history information. The switching history storage unit 1411 of the access point 231 stores, for example, switching history information 1700 depicted in FIG. 17. In the switching history information 1700, date (yy/mm/dd), time (hh:mm:ss), latitude, longitude, and frequencies before and after switching are correlated with each position where frequency switching occurred by the access point 231 in the past. "none" indicated for the frequencies before and after switching means that no frequencies were available to the access point 231.

For example, a first record of the switching history information 1700 indicates that the access point 231 passed the passage point p1 at 10:07:00 on 12/11/11, latitude (36 [degrees], 43'00"), and longitude (140 [degrees], 22'00"). The first record of the switching history information 1700 indicates that switching from frequency f2 to frequency f1 occurred when the access point 231 passed the passage point p1.

(Frequency switching history on predicted route)

FIG. 18 is a diagram of an example of frequency switching history on the predicted route depicted in FIG. 13. The frequency selecting unit 1412 of the access point 231 creates a table 1800 depicted in FIG. 18 through operations based on the predicted route information (see, for example, FIG. 5) output from the route obtaining unit 311 and based on the switching history information (see, for example, FIG. 17) stored in the switching history storage unit 1411.

In the table 1800, switching information is correlated with passage points where frequency switching occurred by the access point 231 in the past, among passage points of the access point 231 based on the predicted route indicated by the predicted route information. The switching information indicates frequencies before and after switching at a corresponding passage point.

For each of the specified frequencies f1 and f2, the frequency selecting unit 1412 calculates based on the table 1800, a predicted time for the next frequency switching to occur by the access point 231 if the specified frequency is set in the access point 231.

In the example depicted in FIG. 18, if the frequency f1 is set in the access point 231, the frequency f1 remains available until 10:34:00 of the same date and consequently, the predicted time for frequency switching to occur by the access point 231 is 34 min. If the frequency f2 is set in the access point 231, the frequency f2 is available until 10:07:00 of the same date and consequently, the predicted time for frequency switching to occur by the access point 231 is 7 min.

Accordingly, the frequency selecting unit 1412 selects as the frequency to be used by the access point 231, the frequency f1 having for which the predicted time for frequency switching to occur by the access point 231 is longest among the specified frequencies f1 and f2.

(Selection of use frequency based on movement distance for frequency switching to occur)

Although the example depicted in FIG. 13 has been described in a case where the frequency to be used is selected based on the predicted time for frequency switching to occur, configuration may be such that the frequency to be used is selected based on the predicted movement distance of the access point 231 for frequency switching to occur.

For example, for each of the specified available frequencies, the frequency selecting unit 1412 calculates a predicted movement distance of the access point 231 for the next frequency switching to occur if the specified available frequency is set in the communications unit 314. The frequency selecting unit 1412 then selects the available frequency for which the calculated predicted movement distance is greatest among the specified available frequencies, as the frequency to be used by the access point 231.

(Another example of switching history information)

FIG. 19 is a diagram of another example of the switching history information. In FIG. 19, parts identical to those depicted in FIG. 17 are designated by the same reference letters or numerals used in FIG. 17 and description thereof will be omitted. The switching history storage unit 1411 of the access point 231 may store, for example, the switching history information 1700 depicted in FIG. 19. In the switching history information 1700 depicted in FIG. 19, passage direction in addition to the items depicted in FIG. 17 is correlated with each position where frequency switching occurred by the access point 231 in the past.

The passage direction of the switching history information 1700 depicted in FIG. 19 is indicated, for example, by an angle relative to a predetermined direction (e.g., right direction in FIG. 13).

For example, a first record of the switching history information 1700 indicates that at 10:07:00 on 12/11/11, the access point 231 passed a passage point p1 in the direction of 180 degrees (e.g., left direction of FIG. 13) relative to the predetermined direction.

In this manner, the switching history information 1700 may include a history of frequency switching by the access point 231, corresponding to combinations of positions on the predicted route L1 and directions in which the access point 231 passed through the positions on the predicted route L1. This enables the switching history (see, e.g., FIG. 18) of frequencies on the predicted route L1 of the access point 231 to be more accurately determined.

In this manner, according to the second embodiment, the radio communications apparatus can set a frequency for which the predicted time for the frequency to become unavailable is relatively long among the frequencies available to the radio communications apparatus at the position of the radio communications apparatus. Alternatively, the radio communications apparatus can set a frequency for which the predicted movement distance for the frequency to become unavailable is longer among frequencies available to the radio communications apparatus at the position of the radio communications apparatus. As a result, frequency switching by the radio communications apparatus can be reduced.

(Third embodiment)

Parts of a third embodiment differing from the first embodiment will be described.

(Communications system according to third embodiment)

The communications system 100 according to the third embodiment is similar to the communications system 100 depicted in FIGs. 1-1 and 1-2, for example. It is to be noted, however, that for each of the specified frequencies, the calculating unit 123 of the communications control apparatus 120 calculates for the radio communications apparatus 110, a predicted frequency switching count of frequency switching that occurs on the predicted route of the radio communications apparatus 110 if the specified frequency is set in the radio communications apparatus 110. The calculating unit 123 notifies the selecting unit 124 of the specified frequencies and the predicted count calculated for each specified frequency.

Based on the predicted count notified by the calculating unit 123, the selecting unit 124 selects a frequency to be used by the radio communications apparatus 110 from among frequencies notified by the calculating unit 123. For example, the selecting unit 124 preferentially selects a frequency for which the predicted count notified by the calculating unit 123 is greater among the frequencies notified by the calculating unit 123.

The communications system 100 according to the third embodiment enables the radio communications apparatus 110 to set a frequency for which less frequency switching occurs on the predicted route, among the frequencies available at the position of the radio communications apparatus 110. As a result, frequency switching by the radio communications apparatus 110 can be reduced.

Although description has been given of a configuration where the frequency of the radio communications apparatus 110 is selected at the communications control apparatus 120, configuration may be such that as in the second embodiment, the frequency of the radio communications apparatus 110 is selected at the radio communications apparatus 110. For example, for each of the specified frequencies, the calculating unit 1211 depicted in FIGs. 12-1 and 12-2 calculates a predicted frequency switching count for the predicted route of the radio communications apparatus 110 if the specified frequency is set in the radio communications apparatus 110. The calculating unit 1211 then notifies the selecting unit 124 of the specified frequencies and the predicted count calculated for each of the specified frequencies. Based on the predicted count notified by the calculating unit 1211, the selecting unit 124 selects a frequency to be used by the radio communications apparatus 110 from among the frequencies notified by the calculating unit 1211.

(Application example of communications system according to third embodiment)

FIG. 20 is a diagram of an application example of the communications system according to the third embodiment. In FIG. 20, parts identical to those depicted in FIG. 2 and 10 are designated by the same reference letters or numerals used in FIG. 2 and 10 and will not again be described. The example depicted in FIG. 20 assumes that the frequencies available for radio communication by the access point 231 are frequencies f1 to f3. The frequencies f1 to f3 are frequencies differing from one another.

In the example depicted in FIG. 20, the passage point p1 is not in the area 221 but is in the area 1011. Thus, the frequencies f1 and f2 are available to the access point 231 at the passage point p1. The passage points p2 to p7 are in the areas 221 and 1011. Thus, the frequency f1 is available to the access point 231 at the passage points p2 to p7. The passage point p8 is not in the area 1011 but is in the area 221. Therefore, the frequencies f1 and f3 are available to the access point 231 at the passage point p8.

The boundary point pA is a position on the predicted route L1 where the access point 231 enters the area 221. The boundary point pB is a position on the predicted route L1 where the access point 231 leaves the 1011.

For example, if the access point 231 is located at the passage point p1, frequencies available to the access point 231 are the frequencies f1 and f2. If the access point 231 sets the frequency f1 at the passage point p1, the predicted frequency switching count for the access point 231 on the predicted route L1 is 0. If the access point 231 sets the frequency f2 at the passage point p1, the predicted frequency switching count is 1 for the frequency switch at the boundary point pA.

The WS database server 240 thus causes the access point 231 to set the frequency f1 for which the predicted frequency switching count is smallest among the frequencies f1 to f3 available to the access point 231 at the passage point p1. As a result, frequency switching by the access point 231 can be reduced.

(Configurations of communications system)

The access point 231 and the WS database server 240 depicted in FIG. 20 are similar to those depicted in FIGs. 3-1 and 3-2, for example. However, for each of the specified available frequencies, the frequency selecting 323 of the WS database server 240 calculates a predicted frequency switching count for the access point 231 on the predicted route L in a case of the specified available frequency being set in the access point 231. The frequency selecting unit 323 then selects, as the frequency to be used by the access point 231, a frequency for which the calculated predicted count is greatest among the available frequencies of the access point 231.

(Operation example of communications system)

FIG. 21 is a sequence diagram of an operation example of the communications system depicted in FIG. 20. The communications system 200 depicted in FIG. 20 operates, for example, as indicated by the steps depicted in FIG. 21. First, the access point 231 transmits predicted route information of the access point 231 to the WS database server 240 (step S2101).

The WS database server 240 then specifies available frequencies corresponding to the current position of the access point 231, based on the predicted route information transmitted at step S2101 and based on the correspondence information (step S2102). For each of the available frequencies specified at step S2102, the WS database server 240 then calculates a predicted count of frequency switching by the access point 230 if the WS database server 240 causes the access point 231 to set the available frequency (step S2103).

The WS database server 240 selects from among the available frequencies specified at step S2102, the frequency for which the predicted count calculated at step S2103 is smallest (step S2104). The WS database server 240 transmits available frequency information indicating the frequency selected at step S2104 to the access point 231 (step S2105).

The access point 231 sets the frequency indicated by the available frequency information transmitted at step S2105, as a frequency to be used for radio communication by the access point 231 (step S2106), and terminates a series of the operations.

The above operations enable the access point 231 to set a frequency for which the predicted count of frequency switching on the predicted route L1 is smallest among frequencies available to the access point 231 at the current position of the access point 231. As a result, frequency switching by the access point 231 can be reduced.

The operations depicted in FIG. 21 are executed, for example, at the time of powering on of the access point 231. Nonetheless, the timing at which the operations depicted in FIG. 21 are executed are not limited hereto.

(Frequencies available at positions on predicted route)

FIG. 22 is a diagram of an example of frequencies available at positions on the predicted route depicted in FIG. 20. The frequency selecting unit 323 of the WS database server 240 depicted in FIG. 20 creates a table 2200 depicted in FIG. 22 through calculations based on predicted route information output from the communications unit 322 and based on correspondence information stored in the WS database 321.

In the table 2200, similar to the table 700 depicted in FIG. 7, frequencies available to the access point 231 are correlated with each passage point of the access point 231 based on the predicted route indicated by the predicted route information.

In the example depicted in FIG. 22, if the frequency f1 is set in the access point 231, the predicted route L1 has no history that the frequency f1 became unavailable and consequently, the predicted frequency switching count on the predicted route L1 is 0. If the frequency f2 is set in the access point 231, the predicted route L1 has a history that the frequency f2 became unavailable at the passage point p2 and consequently, the predicted frequency switching count on the predicted route L1 is 1.

The frequency selecting unit 323, therefore, selects, as the frequency used by the access point 231, the frequency f1 for which the predicted frequency switching count on the predicted route L1 is smallest among the specified frequencies f1 and f2.

In this manner, according to the third embodiment, the radio communications apparatus can set a frequency for which the predicted frequency switching count for the predicted route is smallest among frequencies available to the radio communications apparatus at the position of the radio communications apparatus. As a result, frequency switching by the radio communications apparatus can be reduced.

(Fourth embodiment)

Parts of a fourth embodiment differing from the second embodiment will be described.

(Communications system according to fourth embodiment)

The communications system 100 according to the fourth embodiment is similar to the communications system 100 depicted in FIGs. 12-1 and 12-2 for example. However, the obtaining unit 111 of the radio communications apparatus 110 obtains history information indicating history of switching of the frequencies used for radio communication by the radio communications apparatus 110 in a predetermined range that includes the position of the radio communications apparatus 110. The obtaining unit 111 outputs the obtained history information to the calculating unit 1211.

For each of the frequencies indicated by the frequency information output from the receiving unit 113, the calculating unit 1211 calculates a count of switching from the frequency to another frequency occurring in the predetermined range, based on the history information output from the obtaining unit 111. The calculating unit 1211 then notifies the selecting unit 124 of the frequencies indicated by the frequency information and the count calculated for each frequency indicated by the frequency information.

Based on the counts notified by the calculating unit 1211, the selecting unit 124 selects a frequency to be used by the radio communications apparatus 110 among the frequencies notified by the calculating unit 1211. The selecting unit 124 then notifies the communications unit 114 of the selected frequency.

(Application example of communications system according to fourth embodiment)

FIG. 23 is a diagram of an application example of the communications system according to the fourth embodiment. In FIG. 23, parts identical to those depicted in FIG. 2 are designated by the same reference letters or numerals used in FIG. 2 and will not again be described. The communications system 100 according to the fourth embodiment is applicable to the communications system 200 depicted in FIG. 23, for example. A vehicle 2310 depicted in FIG. 2 is equipped with the access point 231. The radio communications apparatus 110 according to the fourth embodiment is applicable to the access point 231, for example. The communications control apparatus 120 according to the fourth embodiment is applicable to the WS database server 240, for example.

A predetermined range 2311 is a predetermined range that includes the position of the access point 231. For example, the predetermined range 2311 is a range encompassed by a circle of a predetermined radius around the access point 231. The predetermined radius is determined, for example, by the travelling speed of the access point 231. For example, if the travelling speed (e.g., average travelling speed) of the access point 231 is v [km/h], the predetermined range 2311 is a range encompassed by a circle with a radius a·v (a is a constant) around the access point 231.

An example is assumed in which the travelling speed of the access point 231 is 30 [km/h] with the constant a=1. In this case, the predetermined range 2311 is a circle with a radius of 30 [km] around the current position of the access point 231.

Switching histories 2321 to 2327 depicted in FIG. 23 are switching histories corresponding to positions in the predetermined range 2311, among histories each indicating a position where frequency switching occurred by the access point 231 in the past and frequencies before and after the frequency switching. The access point 231 obtains the switching histories 2321 to 2327. For example, the access point 231 extracts from stored histories, histories in which the distances between the positions corresponding to the histories and current position of the access point 231 are not more than the predetermined radius, to thereby obtain the switching histories 2321 to 2327.

An example is assumed in which the frequencies available to the access point 231 at the current position of the access point 231 are the frequencies f1 to f3. For each of the frequencies f1 to f3, the access point 231 calculates the number of histories indicating a history of switching from a given frequency to another frequency, among the switching histories 2321 to 2327.

In the example depicted in FIG. 23, the number of histories indicating a history of switching from the frequency f1 to another frequency, among the switching histories 2321 to 2327 is the minimum (0). Thus, the access point 231 sets the frequency f1 among the frequencies f1 to f3 available to the access point 231 at the current position of the access point 231. As a result, frequency switching by the access point 231 can be reduced.

(Configuration of communications system)

FIG. 24-1 is a diagram of an example of configuration of the communications system depicted in FIG. 13. FIG. 24-2 is a diagram of an example of signal flow in the communications system depicted in FIG. 24-1. In FIGs. 24-1 and 24-2, parts identical to those depicted in FIGs. 14-1 and 14-2 are designated by the same reference letters or numerals used in FIGs. 14-1 and 14-2 and will not again be described.

<Configuration example of access point>

As depicted in FIGs. 24-1 and 24-2, the access point 231 includes for example a range obtaining unit 2411 in place of the route obtaining unit 311. The range obtaining unit 2411 obtains current position information indicating the current position of the access point 231. The range obtaining unit 2411 outputs the obtained current position information to the communications unit 312. The range obtaining unit 2411 obtains predicted range information for the access point 231. The predicted range information is, for example, information indicating the range 2311 depicted in FIG. 23, for example. The range obtaining unit 2411 then outputs the obtained predicted route information to the frequency selecting unit 1412.

The frequency selecting unit 1412 selects a frequency to be used by the access point 231, based on the predicted range information output from a range obtaining unit 2411, the available frequency information output from the communications unit 312, and the switching history information output from the switching history storage unit 1411.

The obtaining unit 111 according to the fourth embodiment can be realized, for example, by the range obtaining unit 2411.

(Operation example of communications system)

FIG. 25 is a sequence diagram of an operation example of the communications system depicted in FIG. 23. The communications system 200 depicted in FIG. 23 operates, for example, as indicated by the steps depicted in FIG. 25. First, the access point 231 transmits current position information indicating the current position of the access point 231 to the WS database server 240 (step S2501).

The WS database server 240 then transmits to the access point 231, available frequency information indicating frequencies available to the access point 231 at the position indicated by the current position information transmitted at step S2501 (step S2502).

The access point 231 obtains predicted range information and switching history information of the access point 231 (step S2503). The access point 231 calculates for each available frequency indicated by the available frequency information transmitted at step S2502 and based on switching history information, a count of switching histories included in the predicted range indicated by the predicted range information (step S2504).

The access point 231 then selects from among the available frequencies indicated by the available frequency information transmitted at step S2502, a frequency for which the calculated count is smallest (step S2505). The access point 231 sets the frequency selected at step S2505 as the frequency for use in radio communication (step S2506), and terminates a series of operations.

The above operations enable the access point 231 to set a frequency for which the count of switching histories included in a predetermined range are few among the frequencies available to the access point 231 at the current position of the access point 231. As a result, frequency switching by the access point 231 can be reduced.

The operations depicted in FIG. 25 are executed, for example, at the time of powering on of the access point 231. The timing at which the operations depicted in FIG. 25 are executed is not limited hereto.

(Distance between history position and current position)

FIG. 26 is a diagram of an example of the distance between the history position and the current position. The frequency selecting unit 1412 of the access point 231 creates a table 2600 depicted in FIG. 26, for example, based on the predicted range information output from the range obtaining unit 2411 and based on the switching history information stored in the switching history storage unit 1411. In the table 2600, the distance between the history position (latitude and longitude) and the current position of the access point 231 is correlated with each record of the switching history information 1700 depicted in FIG. 17, for example.

An example is assumed in which the predetermined range 2311 depicted in FIG. 23 is a circle with a radius of 30 [km] around the current position of the access point 231. In this case, a record 2602 of the table 2600 has a distance of 35 [km] and therefore, is out of the predetermined range 2311. On the contrary, the access point 231 selects a frequency based on a record 2601 of the table 2600, corresponding to positions in the predetermined range 2311.

In the example depicted in FIG. 26, the record 2601 has no history of switching from frequency f1 to another frequency. The record 2601 has four histories of switching from frequency f2 to another frequency. The record 2601 has three histories of switching from frequency f3 to another frequency.

The frequency selecting unit 1412 thus selects, as the frequency to be used by the access point 231, the frequency f1 having the least number of histories in the predetermined range 2311 among the frequencies f1 to f3.

(Another example of predetermined range)

Although a case has been described where the predetermined range 2311 is a range encompassed by a circle of a predetermined radius around the access point 231, the predetermined range 2311 is not limited hereto. For example, the range may be determined based on the direction of travel of the access point 231.

FIG. 27 is a diagram of another example of the predetermined range. In FIG. 27, Vx represents the average travelling speed of the access point 231 in an X-axis direction, while Vy represents the average travelling speed of the access point 231 in a Y-axis direction. (Px, Py) represents the current position of the access point 231. In this case, the predetermined range 2311 can be a range expressed by equation (1). In equation (1), a is a real number value ranging in the range of $0 \leq a \leq 1$.

$$(X-Px-a \cdot Vx)^2 + (Y-Py-a \cdot Vy)^2$$
$$= Vx^2 + Vy^2 \qquad (1)$$

As a result, the predetermined range 2311 can be a circle around a position offset in the direction of travel of the access point 231, from the current position of the access point 231. This enables the frequency to be selected based on the history information for a position having a high possibility of being a destination of the access point 231. Thus, a frequency tending to reduce frequency switching by the radio communications apparatus can be selected.

In this manner, according to the fourth embodiment, the radio communications apparatus can set a frequency having a fewer number of histories of switching from a given frequency to another frequency in a predetermined range that includes the position of the radio communications apparatus, among frequencies available to the radio communications apparatus. As a result, frequency switching by the radio communications apparatus can be reduced.

For example, the frequency can be selected by calculating a predicted movement range of the access point 231 from the travelling speed, etc., of the access point 231 and counting the number of histories of frequency switching that occurred in the calculated predicted movement range. Thus, a frequency having a high possibility of reducing frequency switching by the radio communications apparatus can be selected.

(Weighting of history)

The access point 231 may select a frequency based on the count of switching from a given frequency to another frequency, weighted according to the distance from the access point 231 to the position where the corresponding switching occurred. For example, a history weight increases as the distance decreases from the access point 231 to the position where the corresponding switching occurred. This enables a frequency to be selected increasing the history weight for a position having a high possibility of being a destination of the access point 231. Thus, a frequency can be selected that tends to reduce frequency switching by the radio communications apparatus.

A history weight w(r) can be calculated using a monotonically decreasing function expressed in equation (2) below. In equation (2), R designates the radius of the predetermined range 2311. r designates the distance from the access point 231 of the position where a switching corresponding to a history occurred.

$$w(r) = 1 - r/R \qquad (2)$$

As a result, the history weight can be increased as the distance of the position where a corresponding switching occurred from the access point 231 becomes smaller. The history weight can be 0 at the boundary of the predetermined range 2311.

If rf(i) denotes a distance from the access point 231 to an i-th position where a switching from a frequency f to another frequency occurred, the count of switching from a frequency f to another frequency can be calculated using, for example, equation (3) below.

$$Nf = \sum_{i=0}^{nf} w\{rf(i)\} \qquad (3)$$

In equation (3) above, nf denotes the number of positions where a switching of a frequency f occurred in the predetermined range 2311. In the example depicted in FIG. 26, for example, a count Nf (Nf1) of switching of frequency f1 is 0. A count Nf (Nf2) of switching of frequency f2 is as expressed by equation (4) below. A count Nf (Nf3) of switching of frequency f3 is as expressed by equation (5) below.

$$Nf2 = \left(1 - \frac{12}{30}\right) + \left(1 - \frac{26}{30}\right) + \left(1 - \frac{26}{30}\right) + \left(1 - \frac{21}{30}\right) = 1.1666\ldots \quad (4)$$

$$Nf3 = \left(1 - \frac{23}{30}\right) + \left(1 - \frac{21}{30}\right) + \left(1 - \frac{24}{30}\right) = 0.7333\ldots \quad (5)$$

(Fifth embodiment)

Parts of a fifth embodiment differing from the first embodiment will be described.

(Communications system according to fifth embodiment)

FIG. 28-1 is a diagram of an example of the communications system according to a fifth embodiment. FIG. 28-2 is a diagram of an example of signal flow in the communications system depicted in FIG. 28-1. In FIGs. 28-1 and 28-2, parts identical to those depicted in FIGs. 1-1 and 1-2 are designated by the same reference letters or numerals used in FIGs. 1-1 and 1-2 and will not again be described.

Similar to the radio communications apparatus 110, a radio communications apparatus 2830 selects a frequency available to the radio communications apparatus 2830 at the position of the radio communications apparatus 2830, to perform radio communications. Information indicating correspondence between positions and available frequencies is common to the radio communications apparatus 110 and the radio communications apparatus 2830. When frequency switching occurs, the radio communications apparatus 2830 transmits switching information to the communications control apparatus 120. The switching information includes, for example, information indicating the time when and the position where the frequency switching occurred and the frequencies before and after switching. Plural radio communications apparatuses 2830 may be present.

<Communications control apparatus>

The communications control apparatus 120 according to the fifth embodiment includes a receiving unit 2821 and a storage unit 2822, in addition to the configuration depicted in FIGs. 1-1 and 1-2. The receiving unit 2821 receives switching information transmitted from the radio communications apparatus 2830. The receiving unit 2821 then causes the storage unit 2822 to store the received switching information.

For each of the specified frequencies, the calculating unit 123 calculates a count of switching from a given frequency to another frequency on a predicted route indicated by the route information output from the receiving unit 121, based on the switching information stored in the storage unit 2822. The calculating unit 123 notifies the selecting unit 124 of the specified frequencies and the count calculated for each of the specified frequencies.

Alternatively, for each of the specified frequencies, the calculating unit 123 calculates the time or distance for switching to occur from a given frequency to another frequency on a predicted route indicated by the route information output from the receiving unit 121, based on the switching information stored in the storage unit 2822. The calculating unit 123 notifies the selecting unit 124 of the specified frequencies and the time or distance calculated for each of the specified frequencies.

Based on the count or the time or distance required for switching notified by the calculating unit 123, the selecting unit 124 selects a frequency to be used by the radio communications apparatus 110 from among the frequencies notified by the calculating unit 123. For example, the selecting unit 124 preferentially selects a frequency for which the count notified by the calculating unit 123 is greater among the frequencies notified by the calculating unit 123. If the notified information is the time or the distance required for switching, selection is made of a frequency having a longer time or a farthest distance.

The communications system 100 according to the fifth embodiment enables the radio communications apparatus 110 to set a frequency for which the number of times switching to another frequency on the predicted route occurs is fewer or for which the time or distance required for switching is greatest, among the frequencies available to the radio communications apparatus 110 in the position of the radio communications apparatus 110.

FIG. 28-3 is a diagram of another example of signal flow in the communications system depicted in FIG. 28-1. In FIG. 28-3, parts identical to those depicted in FIG. 28-2 are designated by the same reference letters or numerals used in FIG. 28-2 and description thereof will be omitted. As depicted in FIG. 28-3, the obtaining unit 111 of the radio communications apparatus 110 obtains range information indicating a predetermined range including the position of the radio communications apparatus 110. The predetermined range is similar to the predetermined range (predicted movement range) described in the fourth embodiment, for example. The obtaining unit 111 outputs the obtained range information to the transmitting unit 112. The transmitting unit 112 transmits to the communications control apparatus 120, the range information output from the obtaining unit 111.

The receiving unit 121 of the communications control apparatus 120 receives the range information transmitted from the radio communications apparatus 110. The receiving unit 121 outputs the received range information to the calculating unit 123. For each of the specified frequencies, the calculating unit 123 calculates based on the switching information stored in the storage unit 2822, a count of switching from a given frequency to another frequency in the predetermined range indicated by the range information output from the receiving unit 121.

The communications system 100 depicted in FIG. 28-3 enables the radio communications apparatus 110 to set a frequency having a fewer occurrences of switching to another frequency in the predetermined range, among the frequencies available to the radio communications apparatus 110 at the position of the radio communications apparatus 110. As a result, frequency switching by the radio communications apparatus 110 can be reduced.

Similar to the radio communications apparatus 2830, the radio communications apparatus 110 may also transmit switching information to the communications control apparatus 120 when frequency switching has occurred. The receiving unit 2821 receives switching information transmitted from the radio communications apparatus 2830 and causes the storage unit 2822 to store the received switching information. This enables the radio communications apparatus 110 to set a frequency having fewer occurrences of switching to another frequency by the radio communications apparatus 110 and by the radio communications apparatus 2830.

(Application example of communications system according to fifth embodiment)

FIG. 29 is a diagram of an application example of the communications system according to the fifth embodiment. In FIG. 29, parts identical to those depicted in FIG. 2 are designated by the same reference letters or numerals used in FIG. 2 and will not again be described. The communications system 100 depicted in FIGs. 1-1 and 1-2 is applicable to the communications system 200 depicted in FIG. 29, for example. A bus vehicle 2920 is equipped with an access point 2921. A bus vehicle 2930 is equipped with an access point 2931. The radio communications apparatus 2830 depicted in FIGs. 28-1 and 28-2 is applicable to the access points 2921 and 2931, respectively, for example.

When frequency switching occurs, the access points 231, 2921, and 2931 transmit to a switching history database server 2910, switching information indicating the position where the frequency switching has occurred and frequencies before and after the switching. The switching history database server 2910 stores the switching information transmitted from the access points 231, 2921, and 2931.

In this manner, frequency switching information from plural WS devices is aggregated into the switching history database server 2910 so that a frequency to be used by the access point 231 can be selected based on the aggregated switching information. Frequencies used by the access points 2921 and 2931 may also be selected based on the switching information aggregated in the switching history database server 2910.

(Configuration of communications system)

FIG. 30-1 is a diagram of an example of configuration of the communications system depicted in FIG. 29. FIG. 30-2 is a diagram of an example of signal flow in the configuration of the communications system depicted in FIG. 30-1. In FIGs. 30-1 and 30-2, parts identical to those depicted in FIGs. 3-1 and 3-2 are designated by the same reference letters or numerals used in FIGs. 3-1 and 3-2 and will not again be described.

<Switching history database server>

As depicted in FIGs. 30-1 and 30-2, the switching history database server 2910 includes a communications unit 3011, a switching history database 3012, and a frequency selecting unit 3013. The communications unit 3011 performs radio communication with access points 231, 2921, and 2931. For example, the communications unit 3011 receives switching information transmitted from the access points 2921 and 2931. The receiving unit 3011 then causes the switching history database 3012 to store the received switching information.

The communications unit 3011 receives predicted route information transmitted from the access point 231. The communications unit 3011 outputs the received predicted route information to the frequency selecting unit 3013. The communications unit 3011 transmits to the WS database server 240, current position information indicating the current position of the access point 231 indicated by the received predicted route information.

The communications unit 3011 receives available frequency information transmitted from the WS database server 240. The communications unit 3011 outputs the received available frequency information to the frequency selecting unit 3013. The communications unit 301 transmits to the access point 231, available frequency information output from the frequency selecting unit 3013.

The frequency selecting unit 3013 selects a frequency to be used by the access point 231, based on the predicted route information and the available frequency information output from the communications unit 3011 and based on the switching information stored in the switching history database 3012. The frequency selecting unit 3013 outputs available frequency information indicating the selected frequency to the communications unit 3011.

<Configuration example of WS database server>

As depicted in FIGs. 30-1 and 30-2, the WS database server 240 includes the WS database 321 and the communications unit 322. The communications unit 322 performs wire-based communication with the switching history database server 2910. For example, the communications unit 322 receives current position information transmitted from the switching history database server 2910. The receiving unit 322 specifies available frequencies of the access point 231, based on the current position of the access point 231 indicated by the received current position information and based on correspondence information stored in the WS database 321. The communications unit 322 transmits available frequency information indicating the specified available frequencies to the switching history database server 2910.

The receiving units 121 and 2821 and the transmitting unit 125 depicted in FIGs. 28-1 and 28-2 can be realized by the communications unit 3011, for example. The obtaining unit 122 depicted in FIGs. 28-1 and 28-2 can be realized by the WS database server 240, for example. The calculating unit 123 and the selecting unit 124 depicted in FIGs. 28-1 and 28-2 can be realized by the frequency selecting unit 3013, for example. The storage unit 2822 depicted in FIGs. 28-1 and 28-2 can be realized by the switching history database 3012.

(Hardware configuration of switching history database server)

The switching history database server 2910 can be realized by the information processing apparatus 340 depicted in FIG. 3-4, for example. The communications unit 3011 can be realized by the wire-based communications interface 344 and the radio communications interface 345 depicted in FIG. 3-4, for example. The switching history database 3012 can be realized by the memory 342 depicted in FIG. 3-4, for example. The frequency selecting unit 3013 can be realized by the CPU 341 depicted in FIG. 3-4, for example.

(Operation example of communications system)

FIG. 31 is a sequence diagram of an operation example of the communications system depicted in FIG. 29. The communications system 200 depicted in FIG. 29 operates, for example, as indicated by the steps depicted in FIG. 31. First, the access point 231 transmits predicted route information indicating the current position and predicted route of the access point 231 to the switching history database server 2910 (step S2901). The switching history database server 2910 transmits to the WS database server 240, current position information indicating the current position of the access point 231 indicated in the predicted route information transmitted at step S3101 (step S3102).

The WS database server 240 transmits to the switching history database server 2910, available frequency information indicating available frequencies at the position indicated by the current position information transmitted at step S3102 (step S3103).

The switching history database server 2910 then calculates the number of switching histories on the predicted route indicated by the predicted route information, for each of the available frequencies indicated by the available frequency information transmitted at step S3103 (step S3104). The switching history database server 2910 then selects a frequency having a minimum number calculated at step S3104, among the available frequencies indicated by the available frequency information (step S3105).

The switching history database server 2910 transmits to the access point 231, available frequency information indicating the frequency selected at step S3105 (step S3106). The access point 231 sets the frequency indicated by the available frequency information transmitted at step S3106, as a frequency to be used for radio communication by the access point 231 (step S3107), and terminates a series of the operations.

The above operations enable the access point 231 to set a frequency for which the switching history count on the predicted route is fewer among frequencies available to the access point 231 at the current position of the access point 231. As a result, frequency switching by the access point 231 can be reduced.

The operations depicted in FIG. 31 are executed, for example, at the time of powering on of the access point 231. The timing at which the operations depicted in FIG. 31 are executed are not limited hereto. For example, the operations depicted in FIG. 31 may be executed every time the frequency being used by the access point 231 becomes unavailable as a result of movement of the access point 231. This can reduce frequency switching, not only at the time of powering on.

The operations depicted in FIG. 31 may be executed every time the predicted route L1 of the access point 231 changes. The operations depicted in FIG. 31 may be executed periodically. This enables the frequency switching by the access point 231 to be reduced, irrespective of a change in the predicted route L1 of the access point 231 due to rerouting, etc.

(Switching information)

FIG. 32 is a diagram of an example of switching information. When frequency switching occurs, the access points 231, 2921, and 2931 transmit switching information 3200 depicted in FIG. 32, for example, to the switching history database server 2910. In the switching information 3200, switching information is correlated with the position where frequency switching has occurred. The switching information indicates the frequencies before and after the switching.

For example, a first record of the switching information 3200 indicates that the frequency has switched from frequency f2 to frequency f3 at latitude (36 [degrees], 38'55") and longitude (140 [degrees], 33'20").

In this manner, according to the fifth embodiment, the radio communications apparatus can set a frequency for which the occurrence of switching to another frequency on the predicted route is fewer among the frequencies available to the radio communications apparatus at the position of the radio communications apparatus. As a result, frequency switching by the radio communications apparatus can be reduced.

(Sixth embodiment)

A sixth embodiment will be described about parts different from the above embodiments. In the above embodiments, although description has been given of a case where only a single network configured by WS devices such as the access point 231 is present, configuration may be such that mutual interference is taken into consideration, if plural networks are present.

For example, mutual interference can be prevented by managing the frequencies used by the WS devices belonging to respective networks in the WS database server 240 such that different frequencies are used between adjacent networks.

When receiving a predicted route from the access point 231 in motion, the WS database server 240 manages the frequencies used so as to suppress interference with the other WS devices on the route through which the access point 231 travels.

For example, frequency assignment to the access point 231 is performed in order of arrival. At the time of selecting the frequency to be used by the access point 231, the frequency usage status is also considered of WS devices located near the predicted route of the access point 231.

If the frequency selected by the methods described in the above embodiments has already been used by another WS apparatus located near the predicted route of the access point 231, the other WS apparatus may be caused to change its frequency.

(Application example of communications system according to sixth embodiment)

FIG. 33 is a diagram of an application example of the communications system according to the sixth embodiment. In FIG. 33, parts identical to those depicted in FIG. 10 are designated by the same reference letters or numerals used in FIG. 10 and will not again be described.

In the example depicted in FIG. 33, the passage point p2 is not in the area 1021 but is in the areas 221 and 1011. Thus, the frequencies f1 and f4, are available to the access point 231 at the passage point p2. The passage points p3 to p6 are in the areas 221, 1011, and 1021. Thus, the frequency f1 is available to the access point 231 at the passage points p3 to p6. The passage point p7 is not in the area 1011 but is in the areas 221 and 1021. Therefore, the frequencies f1 and f3 are available to the access point 231 at the passage point p.

Assume however that a WS device 3310 is located near the predicted route L1 of the access point 231 and that the WS device 3310 is performing radio communication using the frequency f1. An Area 3311 is an area in which interference occurs with radio communication performed by the WS device 3310 using the frequency f1. In this case, if the access point 231 uses the frequency f1 from the boundary point pA to the passage point p2, for example, interference occurs with the WS device 3310.

Since the access point 231 and the WS device 3310 are WS devices using frequencies secondarily and have no priority for assignment, unlike licensed systems such as television stations 220, 1010, and 1020. It is desirable, however, that the access point 231 and the WS device 3310 do not use the same frequency.

For instance, a table indicating available frequencies is updated also using frequencies selected by the access point 231 and the WS device 3310 so that frequencies of the access point 231 and the WS device 3310 can be selected using the updated table.

(Available frequency at positions on predicted route)

FIG. 34 is a diagram of an example of frequencies available at positions on the predicted route depicted in FIG. 33. The frequency selecting unit 323 of the WS database server 240 depicted in FIG. 33 creates, for example, a table 3400 depicted in FIG. 34 through calculations based on the predicted route information output from the communications unit 322 and based on the correspondence information stored in the WS database 321.

In the table 3400, similar to the table 700 depicted in FIG. 7, frequencies available to the access point 231 are correlated with each passage point of the access point 231 based on the predicted route indicated by the predicted route information.

(Update of table indicating available frequencies)

FIG. 35 is a diagram of an example of an updated table indicating available frequencies. If the WS device 3310 is using the frequency f1, the access point 231 cannot use the frequency f1 from the boundary point pA to the passage point p2. For this reason, the frequency f1 is excluded from frequencies corresponding to the boundary point pA and the passage point p2. Thus, in this case, the frequency selected from among the frequencies f1, f2, and f4 as a frequency to be used by the access point 231 is, for example, the frequency f4 for which switching does not occur until the boundary point pB.

FIG. 36 is a diagram of another example of the updated table indicating available frequencies. For example, if the WS device 3310 switches the frequency from frequency f1 to frequency f4, the access point 231 cannot use the frequency f4 from the boundary point pA to the passage point p2. The access point 231 is allowed to use the frequency f1 from the boundary point pA to the passage point p2.

For this reason, in the table 3400, the frequency f4 is excluded from frequencies corresponding to the boundary point pA and the passage point p2. Thus, in this case, for example, the frequency f1 for which switching does not occur is selected as the frequency to be used by the access point 231 among the frequencies f1, f2, and f4.

As set forth hereinabove, according to the communications system, the communications control apparatus, the radio communications apparatus, and the communications method, frequency switching can be reduced. As a result, the volume of communication accompanying frequency switching, for example, can be reduced.

EXPLANATIONS OF LETTERS OR NUMERALS

| 100, 200 | communications system |
| 110, 2830 | radio communications apparatus |
| 111, 122 | obtaining unit |
| 112, 125 | transmitting unit |
| 113, 121, 2821 | receiving unit |
| 114, 312, 314, 322, 911, 921, 3011 | communications unit |
| 120 | communications control apparatus |
| 123, 1211 | calculating unit |
| 124 | selecting unit |
| p1 to p8 | passage point |
| 210, 220, 1010, 1020 | television station |
| 211, 221, 1011, 1021, 3311 | area |
| 230, 2920, 2930 | bus vehicle |
| 231, 2921, 2931 | access point |
| 240 WS | database server |
| 311 | route obtaining unit |
| 313 | frequency setting unit |
| 321 | WS database |
| 323, 1412, 3013 | frequency selecting unit |
| 330, 340 | information processing apparatus |
| 331, 341 | CPU |
| 332, 342 | memory |
| 333, 343 | user interface |
| 334, 345 | radio communications interface |
| 335 GPS | module |
| 339, 349 | bus |
| 344 | wire-based communications interface |
| 500 | predicted route information |
| 600 | correspondence information |
| 700, 1100, 1800, 2200, 2600, 3400 | table |
| 810 | frequency management apparatus |
| 1221 | specifying unit |
| 1301 to 1304, 2321 to 2327 | switching history |
| 1411 | switching history storage unit |
| 1600 | available frequency information |
| 1700 | switching history information |
| 2310 | vehicle |
| 2311 | predetermined range |
| 2411 | range obtaining unit |
| 2601, 2602 | record |
| 2822 | storage unit |
| 2910 | switching history database server |
| 3012 | switching history database |
| 3200 | switching information |
| 3310 | WS device |

**Claims**

1. A communications system (100) including a radio communications apparatus (110) and a communications control apparatus (120),
   the radio communications apparatus (110) comprising:

   a transmitting unit (112) adapted to transmit to the communications control apparatus (120), route information indicating a position of the radio communications apparatus (110) and a predicted route of the radio communications apparatus (110);

the communications control apparatus (120) comprising:

a calculating unit (123) adapted to, for each frequency available to the radio communications apparatus (110) at the position of the radio communications apparatus (110), calculate any one among a predicted time and a predicted movement distance for the frequency to become unavailable to the radio communications apparatus (110), based on the route information transmitted from the radio communications apparatus (110) and, correspondence information of positions of the radio communications apparatus (110) and frequencies available to the radio communications apparatus 110);

a selecting unit (124) adapted to select a frequency to be used by the radio communications apparatus (110) among the frequencies available to the radio communications apparatus (110) at the position of the radio communications apparatus (110), based on any one among the predicted time and the predicted movement distance calculated by the calculating unit (123); and

a transmitting unit (125) adapted to transmit to the radio communications apparatus (110), frequency information indicating the frequency selected by the selecting unit (124); and

the radio communications apparatus(110) further comprising:

a communications unit (114) adapted to perform radio communication using the frequency indicated by the frequency information transmitted from the communications control apparatus (120);

and wherein

for each frequency available to the radio communications apparatus (110) at a position where the selected frequency becomes unavailable to the radio communications apparatus (110), the calculating unit (123) further adapted to calculate any one among a predicted time and a predicted movement distance for the frequency to become unavailable to the radio communications apparatus (110) after the selected frequency becomes unavailable to the radio communications apparatus (110),

the selecting unit (124) adapted to select from among the frequencies available to the radio communications apparatus (110) at the position where the selected frequency becomes unavailable, a frequency to be used by the radio communications apparatus (110) based on the calculated predicted time or predicted movement distance,

the transmitting unit (125) of the communications control apparatus (120) configured to transmit to the radio communications apparatus, (110) frequency information indicating a first frequency for the position of the radio communications apparatus (110) and selected by the selecting unit (124), and a second frequency selected by the selecting unit (124) for the position where the selected frequency becomes unavailable, and

the communications unit (114) configured to perform radio communication using the first frequency indicated by the frequency information transmitted from the communications control apparatus (120) and, when the first frequency becomes unavailable, adapted to use the second frequency indicated by the frequency information to perform radio communication.

2. The communications system (100) according to claim 1, wherein
the calculating unit (123) adapted to specify frequencies available to the radio communications apparatus (110) at the position of the radio communications apparatus (110) indicated by the route information, based on the correspondence information, and for each of the specified frequencies, and to calculate any one among the predicted time and the predicted movement distance, based on the correspondence information and the predicted route of the radio communications apparatus (110) indicated by the route information.

3. The communications system (100) according to claim 1 or 2, wherein
each time the frequency being used for radio communication becomes unavailable,
the transmitting unit (112) of the radio communications apparatus (110) is adapted to transmit the route information to the communications control apparatus (120), and
the communications unit (114) of the radio communications apparatus (110) is adapted to perform radio communication using the frequency indicated by the frequency information transmitted from the communications control apparatus (120).

4. The communications system (100) according to claim 1 or 2, wherein
each time the predicted route changes,

the transmitting unit (112) of the radio communications apparatus (110) is adapted to transmit the route information to the communications control apparatus (120), and

the communications unit (114) of the radio communications apparatus (110) is adapted to perform radio communication using the frequency indicated by the frequency information transmitted from the communications control apparatus (120).

5. The communications system (100) according to claim 1 or 2, wherein
periodically,
the transmitting unit (112) of the radio communications (110) apparatus is adapted to transit the route information to the communications control apparatus (120), and
the communications unit (114) of the radio communications apparatus (110) is adapted to perform radio communication using the frequency indicated by the frequency information transmitted from the communications control apparatus (120).

6. The communications system (100) according to any one of claims 1 to 5, wherein
the route information includes positions on the predicted route and predicted times when the positions are pass through, and
the calculating unit (123) is adapted to calculate a predicted time for the frequency to become unavailable to the radio communications apparatus (110), based on the positions and the predicted times indicated by the route information and, the correspondence information.

7. The communications system (100) according to any one of claims 1 to 5, wherein
the route information includes information indicating positions on the predicted route, and
the calculating unit (123) is adapted to calculate a predicted movement distance for the frequency to become unavailable to the radio communications apparatus (110), based on the correspondence information and the positions indicated by the route information.

8. A communications control apparatus (120) comprising:

a receiving unit (121) adapted to receive from a radio communications apparatus (110), route information indicating a position of the radio communications apparatus (110) and a predicted route of the radio communications apparatus (110);
a calculating unit (123) adapted to for each frequency available to the radio communications apparatus (110) at the position of the radio communications apparatus (110), calculate any one among a predicted time and a predicted movement distance for the frequency to become unavailable to the radio communications apparatus (110), based on the route information received by the receiving unit (121) and, correspondence information of positions of the radio communications apparatus (110) and frequencies available to the radio communications apparatus (110);
a selecting unit (124 adapted to select a frequency to be used by the radio communications apparatus (110) among the frequencies available to the radio communications apparatus (110) at the position of the radio communications apparatus (110), based on any one among the predicted time and the predicted movement distance calculated by the calculating unit (123); and
a transmitting unit (125) adapted to transmit to the radio communications apparatus (110), frequency information indicating the frequency selected by the selecting unit (124) ;
and wherein
for each frequency available to the radio communications apparatus (110) at a position where the selected frequency becomes unavailable to the radio communications apparatus (110), the calculating unit (123) is further adapted to calculate any one among a predicted time and a predicted movement distance for the frequency to become unavailable to the radio communications apparatus (110) after the selected frequency becomes unavailable to the radio communications apparatus (110),
the selecting unit (124) adapted to select from among the frequencies available to the radio communications apparatus (110) at the position where the selected frequency becomes unavailable, a frequency to be used by the radio communications apparatus (110) based on the calculated predicted time or predicted movement distance,
the transmitting unit (125) adapted to transmit to the radio communications apparatus, (110) frequency information indicating a first frequency for the position of the radio communications apparatus (110) and selected by the selecting unit (124), and a second frequency selected by the selecting unit (124) for the position where the selected frequency becomes unavailable.

9. A communications method of a communications system (100) including a radio communications apparatus (110) and a communications control apparatus (120), the communications method comprising:

transmitting to the communications control apparatus (120) by the radio communications apparatus (110), route information indicating a position of the radio communications apparatus (110) and a predicted route of the radio communications apparatus (110);

calculating for each frequency available to the radio communications apparatus (110) at the position of the radio communications apparatus (110), any one among a predicted time and a predicted movement distance for the frequency to become unavailable to the radio communications apparatus (110), the calculating being performed by the communications control apparatus (120) based on the route information transmitted from the radio communications apparatus (110) and, correspondence information of positions of the radio communications apparatus (110) and frequencies available to the radio communications apparatus (110);

selecting a frequency to be used by the radio communications apparatus (110) among the frequencies available to the radio communications apparatus (110) at the position of the radio communications apparatus (110), the selecting being performed by the communications control apparatus (120) based on any one among the calculated predicted time and predicted movement distance;

transmitting to the radio communications apparatus (110) by the communications control apparatus (120), frequency information indicating the selected frequency; and

performing radio communication by the radio communications apparatus (110), using the frequency indicated by the frequency information transmitted from the communications control apparatus (120);

and wherein

for each frequency available to the radio communication apparatus (110) at a position where the selected frequency becomes unavailable to the radio communications apparatus (110), further calculating any one among a predicted time and a predicted movement distance for the frequency to become unavailable to the radio communication apparatus (110) after the selected frequency becomes unavailable to the radio communications apparatus (110),

selecting from among the frequencies available to the radio communications apparatus (110) at the position where the selected frequency becomes unavailable, a frequency to be used by the radio communications apparatus (110) based on the calculated predicted time or predicted movement distance,

transmitting to the radio communications apparatus (110) by the communications control apparatus (120) frequency information indicating a first frequency for the position of the radio communications apparatus (110), and a second frequency for the position where the selected frequency becomes unavailable, and

performing radio communication using the first frequency indicated by the frequency information and, when the frequency becomes unavailable, using the second frequency indicated by the frequency information to perform radio communication.

## Patentansprüche

1. Kommunikationssystem (100), das eine Funkkommunikationseinrichtung (110) und eine Kommunikationssteuerungseinrichtung (120) aufweist,
wobei die Funkkommunikationseinrichtung (110) Folgendes umfasst:

eine Übertragungseinheit (112), die dazu eingerichtet ist, die Leitweglenkungsinformationen an die Kommunikationssteuerungseinrichtung (120) zu übertragen, die eine Position der Funkkommunikationseinrichtung (110) und eine vorhergesagte Leitweglenkung der Funkkommunikationseinrichtung (110) anzeigen;
wobei die Kommunikationssteuerungseinrichtung (120) Folgendes umfasst:

eine Berechnungseinheit (123), die dazu eingerichtet ist, für jede Frequenz, die für die Funkkommunikationseinrichtung (110) an der Position der Funkkommunikationseinrichtung (110) verfügbar ist, irgendeine beliebige, entweder eine vorhergesagte Zeit oder eine vorhergesagte Bewegungsentfernung, bis die Frequenz für die Funkkommunikationseinrichtung (110) nicht mehr zur Verfügung stehen wird, auf der Basis der Leitweglenkungsinformationen, die von der Funkkommunikationseinrichtung (110) übertragen werden, und Entsprechungsinformationen von Positionen der Funkkommunikationseinrichtung (110) und Frequenzen zu berechnen, die für die Funkkommunikationseinrichtung (110) verfügbar sind;
eine Auswahleinheit (124), die dazu eingerichtet ist, eine Frequenz, die für die Funkkommunikationseinrichtung (110) verwendet werden soll, unter den Frequenzen, die für die Funkkommunikationseinrichtung (110) an der Position der Funkkommunikationseinrichtung (110) verfügbar sind, auf der Basis von irgendeinem, entweder der vorhergesagten Zeit oder der vorhergesagten Bewegungsentfernung auszuwählen, die durch die Berechnungseinheit (123) berechnet werden; und

eine Übertragungseinheit (125), die dazu eingerichtet ist, die Frequenzinformationen, welche die Frequenz anzeigen, die durch die Auswahleinheit (124) ausgewählt wird, an die Funkkommunikationseinrichtung (110) zu übertragen; und

wobei die Funkkommunikationseinrichtung (110) des Weiteren Folgendes umfasst:

eine Kommunikationseinheit (114), die dazu eingerichtet ist, die Funkkommunikation unter Verwendung der Frequenz durchzuführen, die durch die Frequenzinformationen angezeigt werden, die von der Kommunikationssteuerungseinrichtung (120) übertragen werden;
und wobei
für jede Frequenz, die für die Funkkommunikationseinrichtung (110) an einer Position verfügbar ist, an der die ausgewählte Frequenz für die Funkkommunikationseinrichtung (110) nicht mehr zur Verfügung stehen wird, die Berechnungseinheit (123) des Weiteren dazu eingerichtet ist, irgendeine beliebige, entweder eine vorhergesagte Zeit oder eine vorhergesagte Bewegungsentfernung für die Frequenz zu berechnen, bis sie für die Funkkommunikationseinrichtung (110) nicht mehr zur Verfügung stehen wird, nachdem die ausgewählte Frequenz nicht mehr für die Funkkommunikationseinrichtung (110) zur Verfügung stehen wird, die Auswahleinheit (124), die dazu eingerichtet ist, unter den Frequenzen, die für die Funkkommunikationseinrichtung (110) an der Position, an der die ausgewählte Frequenz nicht mehr zur Verfügung stehen wird, eine Frequenz auszuwählen, die durch die Funkkommunikationseinrichtung (110) auf der Basis der berechneten vorhergesagten Zeit oder der berechneten vorhergesagten Bewegungsentfernung verwendet werden soll, die Übertragungseinheit (125) der Kommunikationssteuerungseinrichtung (120), die dazu ausgestaltet ist, die Frequenzinformationen an die Funkkommunikationseinrichtung (110) zu übertragen, die eine erste Frequenz für die Position der Funkkommunikationseinrichtung (110) anzeigen, und durch die Auswahleinheit (124) ausgewählt wird, und eine zweite Frequenz anzeigen, die durch die Auswahleinheit (124) für die Position ausgewählt wird, an der die ausgewählte Frequenz nicht mehr zur Verfügung stehen wird, und die Kommunikationseinheit (114), die dazu ausgestaltet ist, die Funkkommunikation unter Verwendung der ersten Frequenz durchzuführen, die durch die Frequenzinformationen angezeigt wird, die von der Kommunikationssteuerungseinrichtung (120) übertragen werden, und, wenn die erste Frequenz nicht mehr zur Verfügung stehen wird, dazu eingerichtet ist, die zweite Frequenz zu verwenden, die durch die Frequenzinformationen angezeigt wird, um die Funkkommunikation durchzuführen.

2. Kommunikationssystem (100) nach Anspruch 1, wobei
die Berechnungseinheit (123) dazu eingerichtet ist, Frequenzen zu spezifizieren, die für die Funkkommunikationseinrichtung (110) an der Position der Funkkommunikationseinrichtung (110) verfügbar sind, die durch die Leitweglenkungsinformationen auf der Basis der Entsprechungsinformationen und für jede der spezifizierten Frequenzen angezeigt werden, und irgendeine beliebige, entweder die vorhergesagte Zeit oder die vorhergesagte Bewegungsentfernung auf der Basis der Entsprechungsinformationen und der vorhergesagten Leitweglenkung der Funkkommunikationseinrichtung (110) zu berechnen, die durch die Leitweglenkungsinformationen angezeigt werden.

3. Kommunikationssystem (100) nach Anspruch 1 oder 2, wobei
jedes Mal, wenn die Frequenz, die für die Funkkommunikation verwendet wird, nicht mehr zur Verfügung stehen wird, die Übertragungseinheit (112) der Funkkommunikationseinrichtung (110) dazu eingerichtet ist, die Leitweglenkungsinformationen an die Kommunikationssteuerungseinrichtung (120) zu übertragen, und die Kommunikationseinheit (114) der Funkkommunikationseinrichtung (110) dazu eingerichtet ist, die Funkkommunikation unter Verwendung der Frequenz durchzuführen, die durch die Frequenzinformationen angezeigt wird, die von der Kommunikationssteuerungseinrichtung (120) übertragen werden.

4. Kommunikationssystem (100) nach Anspruch 1 oder 2, wobei
jedes Mal, wenn sich die vorhergesagte Leitweglenkung ändert, die Übertragungseinheit (112) der Funkkommunikationseinrichtung (110) dazu eingerichtet ist, die Leitweglenkungsinformationen an die Kommunikationssteuerungseinrichtung (120) zu übertragen, und die Kommunikationseinheit (114) der Funkkommunikationseinrichtung (110) dazu eingerichtet ist, die Funkkommunikation unter Verwendung der Frequenz durchzuführen, die durch die Frequenzinformationen angezeigt wird, die von der Kommunikationssteuerungseinrichtung (120) übertragen werden.

**5.** Kommunikationssystem (100) nach Anspruch 1 oder 2, wobei
periodisch
die Übertragungseinheit (112) der Funkkommunikationseinrichtung (110) dazu eingerichtet ist, die Leitweglenkungsinformationen an die Kommunikationssteuerungseinrichtung (120) zu übertragen, und
die Kommunikationseinheit (114) der Funkkommunikationseinrichtung (110) dazu eingerichtet ist, die Funkkommunikation unter Verwendung der Frequenz durchzuführen, die durch die Frequenzinformationen angezeigt wird, die von der Kommunikationssteuerungseinrichtung (120) übertragen werden.

**6.** Kommunikationssystem (100) nach irgendeinem der Ansprüche 1 bis 5, wobei
die Leitweglenkungsinformationen Positionen auf der vorhergesagten Leitweglenkung und vorhergesagte Zeiten aufweisen, wenn es sich bei den Positionen um Hindurchführungen handelt, und
die Berechnungseinheit (123) dazu eingerichtet ist, eine vorhergesagte Zeit der Frequenz, bis sie für die Funkkommunikationseinrichtung (110) nicht mehr zur Verfügung stehen wird, auf der Basis der Positionen und der vorhergesagten Zeiten zu berechnen, die durch die Leitweglenkungsinformationen und die Entsprechungsinformationen angezeigt werden.

**7.** Kommunikationssystem (100) nach irgendeinem der Ansprüche 1 bis 5, wobei
die Leitweglenkungsinformationen die Informationen aufweisen, welche Positionen auf der vorhergesagten Leitweglenkung anzeigen, und
die Berechnungseinheit (123) dazu eingerichtet ist, eine vorhergesagte Bewegungsentfernung für die Frequenz, bis sie für die Funkkommunikationseinrichtung (110) nicht mehr zur Verfügung stehen wird, auf der Basis der Entsprechungsinformationen und der Positionen zu berechnen, die durch die Leitweglenkungsinformationen angezeigt werden.

**8.** Kommunikationssteuerungseinrichtung (120), die Folgendes umfasst:

eine Empfangseinheit (121), die dazu eingerichtet ist, von einer Kommunikationssteuerungseinrichtung (110) Leitweglenkungsinformationen zu empfangen, die eine Position der Funkkommunikationseinrichtung (110) und eine vorhergesagte Leitweglenkung der Funkkommunikationseinrichtung (110) anzeigen;
eine Berechnungseinheit (123), die dazu eingerichtet ist, für jede Frequenz, die für die Funkkommunikationseinrichtung (110) an der Position der Funkkommunikationseinrichtung (110) verfügbar ist, irgendeine beliebige, entweder eine vorhergesagte Zeit oder eine vorhergesagte Bewegungsentfernung, bis die Frequenz für die Funkkommunikationseinrichtung (110) nicht mehr zur Verfügung stehen wird, auf der Basis der Leitweglenkungsinformationen, die durch die Empfangseinheit (121) empfangen werden, und der Entsprechungsinformationen von Positionen der Funkkommunikationseinrichtung (110) und Frequenzen zu berechnen, die für die Funkkommunikationseinrichtung (110) verfügbar sind;
eine Auswahleinheit (124), die dazu eingerichtet ist, eine Frequenz, die für die Funkkommunikationseinrichtung (110) verwendet werden soll, unter den Frequenzen, die für die Funkkommunikationseinrichtung (110) an der Position der Funkkommunikationseinrichtung (110) verfügbar sind, auf der Basis von irgendeiner beliebigen, entweder der vorhergesagten Zeit oder der vorhergesagten Bewegungsentfernung auszuwählen, die durch die Berechnungseinheit (123) berechnet werden; und
eine Übertragungseinheit (125), die dazu eingerichtet ist, die Frequenzinformationen, welche die Frequenz anzeigen, die durch die Auswahleinheit (124) ausgewählt wird, an die Funkkommunikationseinrichtung (110) zu übertragen;
und wobei
für jede Frequenz, die für die Funkkommunikationseinrichtung (110) an einer Position verfügbar ist, an der die ausgewählte Frequenz für die Funkkommunikationseinrichtung (110) nicht mehr zur Verfügung stehen wird, die Berechnungseinheit (123) des Weiteren dazu eingerichtet ist, irgendeine beliebige, entweder eine vorhergesagte Zeit oder eine vorhergesagte Bewegungsentfernung für die Frequenz zu berechnen, bis sie für die Funkkommunikationseinrichtung (110) nicht mehr zur Verfügung stehen wird, nachdem die ausgewählte Frequenz für die Funkkommunikationseinrichtung (110) nicht mehr zur Verfügung stehen wird,
die Auswahleinheit (124), die dazu eingerichtet ist, unter den Frequenzen, die für die Funkkommunikationseinrichtung (110) an der Position, an der die ausgewählte Frequenz nicht mehr zur Verfügung stehen wird, eine Frequenz auszuwählen, die für die Funkkommunikationseinrichtung (110) auf der Basis von irgendeiner beliebigen, entweder der berechneten vorhergesagten Zeit oder der berechneten vorhergesagten Bewegungsentfernung, verwendet werden soll,
die Übertragungseinheit (125), die dazu ausgestaltet ist, die Frequenzinformationen an die Funkkommunikationseinrichtung (110) zu übertragen, die eine erste Frequenz für die Position der Funkkommunikationseinrichtung (110) anzeigen, und die durch die Auswahleinheit (124) ausgewählt wird, und eine zweite Frequenz anzeigen, die durch die Auswahleinheit (124) für die Position ausgewählt wird, an der die ausgewählte Frequenz nicht mehr zur Verfügung stehen wird.

9. Kommunikationsverfahren eines Kommunikationssystems (100), das eine Funkkommunikationseinrichtung (110) und eine Kommunikationssteuerungseinrichtung (120) aufweist, wobei das Kommunikationsverfahren Folgendes umfasst:

Übertragen, an die Kommunikationssteuerungseinrichtung (120) durch die Funkkommunikationseinrichtung (110), der Leitweglenkungsinformationen, die eine Position der Funkkommunikationseinrichtung (110) und eine vorhergesagte Leitweglenkung der Funkkommunikationseinrichtung (110) anzeigen;

Berechnen, für jede Frequenz, die für die Funkkommunikationseinrichtung (110) an der Position der Funkkommunikationseinrichtung (110) verfügbar ist, irgendeiner beliebigen, entweder einer vorhergesagten Zeit oder einer vorhergesagten Bewegungsentfernung für die Frequenz, bis sie für die Funkkommunikationseinrichtung (110) nicht mehr zur Verfügung stehen wird, wobei das Berechnen durch die Kommunikationssteuerungseinrichtung (120) auf der Basis der Leitweglenkungsinformationen, die von der Funkkommunikationseinrichtung (110) übertragen werden, und der Entsprechungsinformationen von Positionen der Funkkommunikationseinrichtung (110) und Frequenzen durchgeführt wird, die für die Funkkommunikationseinrichtung (110) verfügbar sind;

Auswählen einer Frequenz, die durch die Funkkommunikationseinrichtung (110) verwendet werden soll, unter den Frequenzen, die für die Funkkommunikationseinrichtung (110) an der Position der Funkkommunikationseinrichtung (110) verfügbar sind, wobei das Auswählen durch die Kommunikationssteuerungseinrichtung (120) auf der Basis von irgendeiner beliebigen, entweder der berechneten vorhergesagten Zeit oder der berechneten vorhergesagten Bewegungsentfernung, durchgeführt wird; und

Übertragen, an die Funkkommunikationseinrichtung (110) durch die Kommunikationssteuerungseinrichtung (120), der Frequenzinformationen, welche die ausgewählte Frequenz anzeigen; und

Durchführen der Funkkommunikationen durch die Funkkommunikationseinrichtung (110) unter Verwendung der Frequenz, die durch die Frequenzinformationen angezeigt wird, die von der Kommunikationssteuerungseinrichtung (120) übertragen werden;

und wobei

für jede Frequenz, die für die Funkkommunikationseinrichtung (110) an einer Position verfügbar ist, an der die ausgewählte Frequenz für die Funkkommunikationseinrichtung (110) nicht mehr zur Verfügung stehen wird, des Weiteren das Berechnen irgendeiner beliebigen, entweder einer vorhergesagten Zeit oder einer vorhergesagten Bewegungsentfernung für die Frequenz, bis sie für die Funkkommunikationseinrichtung (110) nicht mehr zur Verfügung stehen wird, nachdem die ausgewählte Frequenz nicht mehr für die Funkkommunikationseinrichtung (110) zur Verfügung steht,

Auswählen, unter den Frequenzen, die für die Funkkommunikationseinrichtung (110) an der Position, an der die ausgewählte Frequenz nicht mehr zur Verfügung stehen wird, einer Frequenz, die durch die Funkkommunikationseinrichtung (110) auf der Basis der berechneten vorhergesagten Zeit oder der berechneten vorhergesagten Bewegungsentfernung verwendet werden soll,

Übertragen an die Funkkommunikationseinrichtung (110) durch die Kommunikationssteuerungseinrichtung (120), der Frequenzinformationen, die eine erste Frequenz für die Position der Funkkommunikationseinrichtung (110), und eine zweite Frequenz für die Position anzeigen, an der die ausgewählte Frequenz nicht mehr zur Verfügung stehen wird, und

Durchführen der Funkkommunikation unter Verwendung der ersten Frequenz, die durch die Frequenzinformationen angezeigt wird, und wenn die Frequenz nicht mehr zur Verfügung stehen wird, unter Verwendung der zweiten Frequenz, die durch die Frequenzinformationen angezeigt wird, um die Funkkommunikation durchzuführen.

## Revendications

1. Système de communications (100) comprenant un appareil de communications radio (110) et un appareil de commande de communications (120), l'appareil de communications radio (110) comprenant :

une unité de transmission (112) adaptée à transmettre à l'appareil de commande de communications (120) des informations d'itinéraire indiquant une position de l'appareil de communications radio (110) et un itinéraire prévu de l'appareil de communications radio (110) ;

l'appareil de commande de communications (120) comprenant :

une unité de calcul (123) adaptée à, pour chaque fréquence disponible pour l'appareil de communications radio (110) au niveau de la position de l'appareil de communications radio (110), calculer un quelconque élément parmi une durée prévue et une distance de mouvement prévue pour que la fréquence devienne indisponible pour l'appareil de communications radio (110), sur la base des informations d'itinéraire transmises à partir de l'appareil de communications radio (110) et des informations de correspondance de positions de l'appareil de communications radio (110) et de fréquences disponibles pour l'appareil de communications radio (110) ;

une unité de sélection (124) adaptée à sélectionner une fréquence devant être utilisée par l'appareil de communications radio (110) parmi les fréquences disponibles pour l'appareil de communications radio (110) au niveau de la position de l'appareil de communications radio (110), sur la base d'un quelconque élément parmi la durée prévue et la distance de mouvement prévue calculées par l'unité de calcul (123) ; et

une unité de transmission (125) adaptée à transmettre à l'appareil de communications radio (110) des informations de fréquence indiquant la fréquence sélectionnée par l'unité de sélection (124) ; et

l'appareil de communications radio (110) comprenant en outre :

une unité de communications (114) adaptée à réaliser une communication radio au moyen de la fréquence indiquée par les informations de fréquence transmises à partir de l'appareil de commande de communications (120) ;

et dans lequel pour chaque fréquence disponible pour l'appareil de communications radio (110) au niveau d'une position où la fréquence sélectionnée devient indisponible pour l'appareil de communications radio (110), l'unité de calcul (123) est en outre adaptée à calculer un quelconque élément parmi une durée prévue et une distance de mouvement prévue pour que la fréquence devienne indisponible pour l'appareil de communications radio (110) une fois que la fréquence sélectionnée devient indisponible pour l'appareil de communications radio (110),

l'unité de sélection (124) adaptée à sélectionner parmi les fréquences disponibles pour l'appareil de communications radio (110) au niveau de la position où la fréquence sélectionnée devient indisponible une fréquence devant être utilisée par l'appareil de communications radio (110) sur la base de la durée prévue ou de la distance de mouvement prévue calculée,

l'unité de transmission (125) de l'appareil de commande de communications (120) configurée pour transmettre à l'appareil de communications radio (110) des informations de fréquence indiquant une première fréquence pour la position de l'appareil de communications radio (110) et sélectionnée par l'unité de sélection (124) et une seconde fréquence sélectionnée par l'unité de sélection (124) pour la position où la fréquence sélectionnée devient indisponible, et

l'unité de communications (114) configurée pour réaliser une communication radio au moyen de la première fréquence indiquée par les informations de fréquence transmises à partir de l'appareil de commande de communications (120) et, lorsque la première fréquence devient indisponible, adaptée à utiliser la seconde fréquence indiquée par les informations de fréquence pour réaliser une communication radio.

2.  Système de communications (100) selon la revendication 1, dans lequel l'unité de calcul (123) est adaptée à spécifier des fréquences disponibles pour l'appareil de communications radio (110) au niveau de la position de l'appareil de communications radio (110) indiquée par les informations d'itinéraire, sur la base des informations de correspondance, et pour chacune des fréquences spécifiées, et à calculer un quelconque élément parmi la durée prévue et la distance de mouvement prévue, sur la base des informations de correspondance et de l'itinéraire prévu de l'appareil de communications radio (110) indiqué par les informations d'itinéraire.

3.  Système de communications (100) selon la revendication 1 ou 2, dans lequel à chaque fois que la fréquence utilisée pour une communication radio devient indisponible, l'unité de transmission (112) de l'appareil de communications radio (110) est adaptée à transmettre les informations d'itinéraire à l'appareil de commande de communications (120), et l'unité de communications (114) de l'appareil de communications radio (110) est adaptée à réaliser une communication radio au moyen de la fréquence indiquée par les informations de fréquence transmises à partir de l'appareil de commande de communications (120).

4.  Système de communications (100) selon la revendication 1 ou 2, dans lequel à chaque fois que l'itinéraire prévu change, l'unité de transmission (112) de l'appareil de communications radio (110) est adaptée à transmettre les informations d'itinéraire à l'appareil de commande de communications (120), et l'unité de communications (114) de l'appareil de communications radio (110) est adaptée à réaliser une communication radio au moyen de la fréquence indiquée par les informations de fréquence transmises à partir de l'appareil de commande de communications (120).

5. Système de communications (100) selon la revendication 1 ou 2, dans lequel, périodiquement, l'unité de transmission (112) de l'appareil de communications radio (110) est adaptée à transmettre les informations d'itinéraire à l'appareil de commande de communications (120), et l'unité de communications (114) de l'appareil de commande de communications (110) est adaptée à réaliser une communication radio au moyen de la fréquence indiquée par les informations de fréquence transmises à partir de l'appareil de commande de communications (120).

6. Système de communications (100) selon l'une quelconque des revendications 1 à 5, dans lequel les informations d'itinéraire comprennent des positions sur l'itinéraire prévu et des moments prévus pour la traversée des positions, et l'unité de calcul (123) est adaptée à calculer une durée prévue pour que la fréquence devienne indisponible pour l'appareil de communications radio (110), sur la base des positions et des durées prévues indiquées par les informations d'itinéraire et les informations de correspondance.

7. Système de communications (100) selon l'une quelconque des revendications 1 à 5, dans lequel les informations d'itinéraire comprennent des informations indiquant des positions sur l'itinéraire prévu, et l'unité de calcul (123) est adaptée à calculer une distance de mouvement prévue pour que la fréquence devienne indisponible pour l'appareil de communications radio (110), sur la base des informations de correspondance et des positions indiquées par les informations d'itinéraire.

8. Appareil de commande de communications (120) comprenant :

une unité de réception (121) adaptée à recevoir à partir d'un appareil de communications radio (110) des informations d'itinéraire indiquant une position de l'appareil de communications radio (110) et un itinéraire prévu de l'appareil de communications radio (110),
une unité de calcul (123) adaptée à, pour chaque fréquence disponible pour l'appareil de communications radio (110) au niveau de la position de l'appareil de communications radio (110), calculer un quelconque élément parmi une durée prévue et une distance de mouvement prévue pour que la fréquence devienne indisponible pour l'appareil de communications radio (110), sur la base des informations d'itinéraire reçues par l'unité de réception (121) et des informations de correspondance de positions de l'appareil de communications radio (110) et de fréquences disponibles pour l'appareil de communications radio (110) ;
une unité de sélection (124) adaptée à sélectionner une fréquence devant être utilisée par l'appareil de communications radio (110) parmi les fréquences disponibles pour l'appareil de communications radio (110) au niveau de la position de l'appareil de communications radio (110), sur la base d'un quelconque élément parmi la durée prévue et la distance de mouvement prévue calculées par l'unité de calcul (123) ; et
une unité de transmission (125) adaptée à transmettre à l'appareil de communications radio (110) des informations de fréquence indiquant la fréquence sélectionnée par l'unité de sélection (124) ;
et dans lequel pour chaque fréquence disponible pour l'appareil de communications radio (110) au niveau d'une position où la fréquence sélectionnée devient indisponible pour l'appareil de communications radio (110), l'unité de calcul (123) est en outre adaptée à calculer un quelconque élément parmi une durée prévue et une distance de mouvement prévue pour que la fréquence devienne indisponible pour l'appareil de communications radio (110) une fois que la fréquence sélectionnée devient indisponible pour l'appareil de communications radio (110), l'unité de sélection (124) adaptée à sélectionner parmi les fréquences disponibles pour l'appareil de communications radio (110) au niveau de la position où la fréquence sélectionnée devient indisponible une fréquence devant être utilisée par l'appareil de communications radio (110) sur la base de la durée prévu ou de la distance de mouvement prévue calculée,
l'unité de transmission (125) adaptée à transmettre à l'appareil de communications radio (110) des informations de fréquence indiquant une première fréquence pour la position de l'appareil de communications radio (110) et sélectionnée par l'unité de sélection (124) et une seconde fréquence sélectionnée par l'unité de sélection (124) pour la position où la fréquence sélectionnée devient indisponible.

9. Procédé de communications d'un système de communications (100) comprenant un appareil de communications radio (110) et un appareil de commande de communications (120), le procédé de communications comprenant :

la transmission à l'appareil de commande de communications (120) par l'appareil de communications radio (110) d'informations d'itinéraire indiquant une position de l'appareil de communications radio (110) et un itinéraire prévu de l'appareil de communications radio (110) ;

le calcul pour chaque fréquence disponible pour l'appareil de communications radio (110) au niveau de la position de l'appareil de communications radio (110) d'un quelconque élément parmi une durée prévue et une distance de mouvement prévue pour que la fréquence devienne indisponible pour l'appareil de communications radio (110), le calcul étant réalisé par l'appareil de commande de communications (120) sur la base des informations d'itinéraire transmises à partir de l'appareil de communications radio (110) et d'informations de correspondance de positions de l'appareil de communications radio (110) et de fréquences disponibles pour l'appareil de communications radio (110) ;

la sélection d'une fréquence devant être utilisée par l'appareil de communications radio (110) parmi les fréquences disponibles pour l'appareil de communications radio (110) au niveau de la position de l'appareil de communications radio (110), la sélection étant réalisée par l'appareil de commande de communications (120) sur la base d'un quelconque élément parmi la durée prévue et la distance de mouvement prévue calculées ;

la transmission à l'appareil de communications radio (110) par l'appareil de commande de communications (120) d'informations de fréquence indiquant la fréquence sélectionnée ; et

la réalisation d'une communication radio par l'appareil de communications radio (110) au moyen de la fréquence indiquée par les informations de fréquence transmises à partir de l'appareil de commande de communications (120) ; et

pour chaque fréquence disponible pour l'appareil de communication radio (110) au niveau d'une position où la fréquence sélectionnée devient indisponible pour l'appareil de communications radio (110), un autre calcul d'un quelconque élément parmi une durée prévue et une distance de mouvement prévue pour que la fréquence devienne indisponible pour l'appareil de communication radio (110) une fois que la fréquence sélectionnée devient indisponible pour l'appareil de communications radio (110),

la sélection parmi les fréquences disponibles pour l'appareil de communications radio (110) au niveau de la position où la fréquence sélectionnée devient indisponible d'une fréquence devant être utilisée par l'appareil de communications radio (110) sur la base de la durée prévue ou de la distance de mouvement prévue calculée,

la transmission à l'appareil de communications radio (110) par l'appareil de commande de communications (120) d'informations de fréquence indiquant une première fréquence pour la position de l'appareil de communications radio (110) et une seconde fréquence pour la position où la fréquence sélectionnée devient indisponible, et

la réalisation d'une communication radio au moyen de la première fréquence indiquée par les informations de fréquence et, lorsque la fréquence devient indisponible, au moyen de la seconde fréquence indiquée par les informations de fréquence pour réaliser une communication radio.

# FIG.1-2

100

**120**

COMMUNICATIONS CONTROL APPARATUS

**122**
OBTAINING UNIT

**123**
CALCULAT-ING UNIT

**121**
RECEIVING UNIT

**124**
SELECTING UNIT

**125**
TRANSMIT-TING UNIT

ROUTE INFORMATION

FREQUENCY INFORMATION

**110**

RADIO COMMUNICATIONS APPARATUS

**112**
TRANSMIT-TING UNIT

**111**
OBTAINING UNIT

**113**
RECEIVING UNIT

**114**
COMMUNICA-TIONS UNIT

# FIG.2

# FIG.3-1

# FIG.3-2

# FIG.3-3

330

# FIG.3-4

340

# FIG.4

240

| WS DATABASE
SERVER |

231

| ACCESS POINT |

PREDICTED ROUTE INFORMATION

S401

| SPECIFY AVAILABLE FREQUENCIES | S402

| FOR EACH AVAILABLE FREQUENCY,
CALCULATE PREDICTED TIME FOR
NEXT FREQUENCY SWITCHING TO
OCCUR | S403

| SELECT FREQUENCY FOR WHICH
CALCULATED PREDICTED TIME IS
GREATEST | S404

S405

AVAILABLE FREQUENCY
INFORMATION

S406

| SET FREQUENCY INDICATED
BY AVAILABLE FREQUENCY
INFORMATION |

# FIG.5

500

|  | yy/mm/dd | hh:mm:ss | LATITUDE | LONGITUDE |
|---|---|---|---|---|
| p1 | 12/11/11 | 10:00:00 | 36°43'00" | 140°22'00" |
| p2 | 12/11/11 | 10:10:00 | 36°43'00" | 140°19'00" |
| p3 | 12/11/11 | 10:13:00 | 36°42'00" | 140°19'00" |
| p4 | 12/11/11 | 10:16:00 | 36°42'00" | 140°17'00" |
| p5 | 12/11/11 | 10:19:00 | 36°43'00" | 140°17'00" |
| p6 | 12/11/11 | 10:22:00 | 36°43'00" | 140°18'00" |
| p7 | 12/11/11 | 10:28:00 | 36°41'00" | 140°18'00" |
| p8 | 12/11/11 | 10:38:00 | 36°41'00" | 140°15'00" |
| ⋮ | ⋮ | ⋮ | ⋮ | ⋮ |

# FIG.6

600

| LATITUDE | LONGITUDE | AVAILABLE FREQUENCY |
|---|---|---|
| 36°43' | 140°19' | f1 |
| 36°43' | 140°20' | f1 |
| 36°43' | 140°21' | f1,f2 |
| 36°43' | 140°22' | f1,f2 |
| 36°43' | 141°23' | f1,f2 |
| ⋮ | ⋮ | ⋮ |

# FIG.7

700

| yy/mm/dd | hh:mm:ss | LATITUDE | LONGITUDE | AVAILABLE FREQUENCY | DISTANCE |
|---|---|---|---|---|---|
| 12/11/11 | 10:00:00 | 36°43'00" | 140°22'00" | f1,f2 | 3km |
| 12/11/11 | 10:07:00 | 36°43'00" | 140°20'00" | f1 | 1.5km |
| 12/11/11 | 10:10:00 | 36°43'00" | 140°19'00" | f1 | 1.5km |
| 12/11/11 | 10:13:00 | 36°42'00" | 140°19'00" | f1 | 1.5km |
| 12/11/11 | 10:16:00 | 36°42'00" | 140°17'00" | f1 | 1.5km |
| 12/11/11 | 10:19:00 | 36°43'00" | 140°17'00" | f1 | 1.5km |
| 12/11/11 | 10:22:00 | 36°43'00" | 140°18'00" | f1 | 3km |
| 12/11/11 | 10:28:00 | 36°41'00" | 140°18'00" | f1 | 3km |
| 12/11/11 | 10:34:00 | 36°41'00" | 140°16'00" | nothing | 1.5km |
| 12/11/11 | 10:38:00 | 36°41'00" | 140°15'00" | nothing | ⋮ |
| ⋮ | ⋮ | ⋮ | ⋮ | ⋮ | ⋮ |

# FIG.8

# FIG.9-1

```
      240                          810                              231
┌─────────────────────┐  ┌──────────────────────────┐  ┌──────────────────────────────────┐
│ WS DATABASE SERVER  │  │ FREQUENCY MANAGEMENT     │  │ ACCESS POINT                     │
│                     │  │ APPARATUS                │  │                                  │
│   321       911     │  │   921        323         │  │            313         314        │
│ ┌──────┐ ┌────────┐ │  │ ┌────────┐ ┌──────────┐  │  │         ┌─────────┐ ┌─────────┐  │
│ │  WS  │ │COMMUNI-│ │  │ │COMMUNI-│ │FREQUENCY │  │  │         │FREQUENCY│ │COMMUNI- │  │
│ │DATA- │─│CATIONS │─┼──┼─│CATIONS │─│SELECTING │  │  │         │SETTING  │─│CATIONS  │  │
│ │BASE  │ │ UNIT   │ │  │ │ UNIT   │ │ UNIT     │  │  │         │ UNIT    │ │ UNIT    │  │
│ └──────┘ └────────┘ │  │ └────────┘ └──────────┘  │  │         └─────────┘ └─────────┘  │
│                     │  │              322         │  │   312        311                 │
│                     │  │          ┌──────────┐    │  │ ┌────────┐ ┌─────────┐           │
│                     │  │          │COMMUNI-  │    │  │ │COMMUNI-│ │ ROUTE   │           │
│                     │  │          │CATIONS   │────┼──┼─│CATIONS │─│OBTAINING│           │
│                     │  │          │ UNIT     │    │  │ │ UNIT   │ │ UNIT    │           │
│                     │  │          └──────────┘    │  │ └────────┘ └─────────┘           │
└─────────────────────┘  └──────────────────────────┘  └──────────────────────────────────┘
```

# FIG.9-2

# FIG.10

1011 (f3 NOT AVAILABLE)

240

200

231

230

p5 p6 pB pA p1

p4 p2

p8 L1

pC p3

p7

1020 f4

f2 220

f3 1010

f1,f2,f3
AVAILABLE

f1,f3
AVAILABLE

f1
AVAILABLE

f1,f4
AVAILABLE

f1,f2,f4
AVAILABLE

1021 (f4 NOT AVAILABLE)

221 (f2 NOT AVAILABLE)

# FIG.11

1100

| | yy/mm/dd | hh:mm:ss | LATITUDE | LONGITUDE | AVAILABLE FREQUENCY |
|---|---|---|---|---|---|
| p1 | 12/11/11 | 10:00:00 | 36°43'00" | 140°22'00" | f1,f2,f4 |
| pA | 12/11/11 | 10:04:00 | 36°43'00" | 140°21'00" | f1,f4 |
| pB | 12/11/11 | 10:07:00 | 36°43'00" | 140°20'00" | f1 |
| p2 | 12/11/11 | 10:10:00 | 36°43'00" | 140°19'00" | f1 |
| p3 | 12/11/11 | 10:13:00 | 36°42'00" | 140°19'00" | f1 |
| p4 | 12/11/11 | 10:16:00 | 36°42'00" | 140°17'00" | f1 |
| p5 | 12/11/11 | 10:19:00 | 36°43'00" | 140°17'00" | f1 |
| p6 | 12/11/11 | 10:22:00 | 36°43'00" | 140°18'00" | f1 |
| p7 | 12/11/11 | 10:28:00 | 36°41'00" | 140°18'00" | f1 |
| pC | 12/11/11 | 10:28:00 | 36°41'00" | 140°16'00" | f1,f3 |
| p8 | 12/11/11 | 10:38:00 | 36°41'00" | 140°15'00" | f1,f3 |
| ⋮ | ⋮ | ⋮ | ⋮ | ⋮ | ⋮ |

FIG.12-1                                    <u>100</u>

<u>120</u>

COMMUNICATIONS CONTROL APPARATUS

| <u>122</u> | <u>1221</u> | <u>121</u> |
|---|---|---|
| OBTAINING UNIT | SPECIFYING UNIT | RECEIVING UNIT |
| | | <u>125</u> |
| | | TRANSMIT-TING UNIT |

<u>110</u>

RADIO COMMUNICATIONS APPARATUS

| <u>112</u> | <u>111</u> | <u>114</u> |
|---|---|---|
| TRANSMIT-TING UNIT | OBTAINING UNIT | COMMUNICA-TIONS UNIT |
| <u>113</u> | <u>1211</u> | <u>124</u> |
| RECEIVING UNIT | CALCULAT-ING UNIT | SELECTING UNIT |

# FIG.12-2

100

**120 — COMMUNICATIONS CONTROL APPARATUS**

- 122 — OBTAINING UNIT
- 1221 — SPECIFYING UNIT
- 121 — RECEIVING UNIT
- 125 — TRANSMITTING UNIT

POSITION INFORMATION

FREQUENCY INFORMATION

**110 — RADIO COMMUNICATIONS APPARATUS**

- 112 — TRANSMITTING UNIT
- 111 — OBTAINING UNIT
- 114 — COMMUNICATIONS UNIT
- 113 — RECEIVING UNIT
- 1211 — CALCULATING UNIT
- 124 — SELECTING UNIT

# FIG.13

## FIG.14-1

## FIG.14-2

# FIG.15

WS DATABASE SERVER ⌐240

ACCESS POINT ⌐231

CURRENT POSITION INFORMATION — S1501

AVAILABLE FREQUENCY INFORMATION

S1502

OBTAIN PREDICTED ROUTE INFORMATION AND SWITCHING HISTORY INFORMATION — S1503

FOR EACH AVAILABLE FREQUENCY, CALCULATE PREDICTED TIME FOR NEXT FREQUENCY SWITCHING TO OCCUR — S1504

SELECT FREQUENCY FOR WHICH CALCULATED PREDICTED TIME IS GREATEST — S1505

SET SELECTED FREQUENCY — S1506

# FIG.16

1600

| AVAILABLE FREQUENCY |
| --- |
| f1 |
| f2 |
| ⋮ |

# FIG.17

1700

| yy/mm/dd | hh:mm:ss | LATITUDE | LONGITUDE | SWITCHING INFORMATION |
| --- | --- | --- | --- | --- |
| 12/11/11 | 10:07:00 | 36°43'00" | 140°20'00" | f2→f1 |
| 12/11/11 | 10:34:00 | 36°41'00" | 140°16'00" | f1→none |
| ⋮ | ⋮ | ⋮ | ⋮ | ⋮ |

# FIG.18

1800

| yy/mm/dd | hh:mm:ss | LATITUDE | LONGITUDE | SWITCHING INFORMATION |
| --- | --- | --- | --- | --- |
| 12/11/11 | 10:00:00 | 36°43'00" | 140°22'00" | |
| 12/11/11 | 10:07:00 | 36°43'00" | 140°20'00" | f2→f1 |
| 12/11/11 | 10:10:00 | 36°43'00" | 140°19'00" | |
| 12/11/11 | 10:13:00 | 36°42'00" | 140°19'00" | |
| 12/11/11 | 10:16:00 | 36°42'00" | 140°17'00" | |
| 12/11/11 | 10:19:00 | 36°43'00" | 140°17'00" | |
| 12/11/11 | 10:22:00 | 36°43'00" | 140°18'00" | |
| 12/11/11 | 10:28:00 | 36°41'00" | 140°18'00" | |
| 12/11/11 | 10:34:00 | 36°41'00" | 140°16'00" | f1→none |
| 12/11/11 | 10:38:00 | 36°41'00" | 140°15'00" | |
| ⋮ | ⋮ | ⋮ | ⋮ | ⋮ |

# FIG.19

1700

| yy/mm/dd | hh:mm:ss | LATITUDE | LONGITUDE | PASSAGE DIRECTION | SWITCHING INFORMATION |
|---|---|---|---|---|---|
| 12/11/11 | 10:07:00 | 36°43'00" | 140°20'00" | 180°(←) | f2→f1 |
| 12/11/11 | 10:34:00 | 36°41'00" | 140°16'00" | 180°(←) | f1→none |
| 12/11/13 | 14:31:32 | 36°43'00" | 140°16'00" | 0°(→) | none→f1 |
| 12/11/14 | 15:22:00 | 36°43'00" | 140°20'00" | 0°(→) | f1→f2 |
| ⋮ | ⋮ | ⋮ | ⋮ | ⋮ | ⋮ |

# FIG.20

f1,f3
AVAILABLE

f1
AVAILABLE

f1,f2
AVAILABLE

221
(f2 NOT AVAILABLE)

1010
(f3 NOT AVAILABLE)

# FIG.21

# FIG.22

2200

|  | yy/mm/dd | hh:mm:ss | LATITUDE | LONGITUDE | AVAILABLE FREQUENCY |
|---|---|---|---|---|---|
| p1 | 12/11/11 | 10:00:00 | 36°43'00" | 140°22'00" | f1,f2 |
| p2 | 12/11/11 | 10:10:00 | 36°43'00" | 140°19'00" | f1 |
| p3 | 12/11/11 | 10:13:00 | 36°42'00" | 140°19'00" | f1 |
| p4 | 12/11/11 | 10:16:00 | 36°42'00" | 140°17'00" | f1 |
| p5 | 12/11/11 | 10:19:00 | 36°43'00" | 140°17'00" | f1 |
| p6 | 12/11/11 | 10:22:00 | 36°43'00" | 140°18'00" | f1 |
| p7 | 12/11/11 | 10:28:00 | 36°41'00" | 140°18'00" | f1 |
| p8 | 12/11/11 | 10:38:00 | 36°41'00" | 140°15'00" | f1,f3 |
| ⋮ | ⋮ | ⋮ | ⋮ | ⋮ | ⋮ |

FIG.23

## FIG.24-1

WS DATABASE SERVER 240

WS DATABASE 321

COMMUNI-CATIONS UNIT 322

ACCESS POINT 231

COMMUNI-CATIONS UNIT 314

FREQUENCY SELECTING UNIT 1412

SWITCHING HISTORY STORAGE UNIT 1411

COMMUNI-CATIONS UNIT 312

RANGE OBTAINING UNIT 2411

## FIG.24-2

WS DATABASE SERVER 240

WS DATABASE 321

COMMUNI-CATIONS UNIT 322

AVAILABLE FREQUENCY INFORMATION

CURRENT POSITION INFORMATION

ACCESS POINT 231

COMMUNI-CATIONS UNIT 314

FREQUENCY SELECTING UNIT 1412

SWITCHING HISTORY STORAGE UNIT 1411

COMMUNI-CATIONS UNIT 312

RANGE OBTAINING UNIT 2411

60

# FIG.25

```
    ⌐240                          ⌐231
┌─────────────┐              ┌─────────────┐
│ WS DATABASE │              │             │
│   SERVER    │              │ACCESS POINT │
└─────────────┘              └─────────────┘
      │                            │
      │       CURRENT POSITION  S2501
      │◄───────INFORMATION─────────┤
      │      AVAILABLE FREQUENCY   │
      ├─────────INFORMATION───────►│
      │        ⌐                   │
      │     S2502                  │
```

┌────────────────────────────────┐
│    OBTAIN PREDICTED RANGE       │
│  INFORMATION AND SWITCHING      │  ～S2503
│      HISTORY INFORMATION        │
└────────────────────────────────┘

┌────────────────────────────────┐
│      FOR EACH AVAILABLE         │
│  FREQUENCY, CALCULATE COUNT     │
│   OF SWITCHING HISTORIES        │  ～S2504
│  INCLUDED IN PREDICTED RANGE    │
└────────────────────────────────┘

┌────────────────────────────────┐
│  SELECT FREQUENCY FOR WHICH     │  ～S2505
│  CALCULATED COUNT IS SMALLEST   │
└────────────────────────────────┘

┌────────────────────────────────┐
│      SET SELECTED FREQUENCY     │  ～S2506
└────────────────────────────────┘

# FIG.26

| yy/mm/dd | hh:mm:ss | LATITUDE | LONGITUDE | SWITCHING INFORMATION | DISTANCE |
|---|---|---|---|---|---|
| 12/11/11 | 10:07:00 | 36°38'55" | 140°33'20" | f2→f3 | 12km |
| 12/11/12 | 10:34:45 | 36°45'29" | 140°39'15" | f3→f2 | 23km |
| 12/11/13 | 14:31:32 | 36°50'38" | 140°29'39" | f3→f1 | 21km |
| 12/11/13 | 15:22:21 | 36°46'54" | 140°09'39" | f2→f3 | 26km |
| 12/11/14 | 13:28:05 | 36°41'30" | 140°07'50" | f2→f1 | 26km |
| 12/11/14 | 15:22:00 | 36°42'15" | 140°14'44" | f2→f1 | 21km |
| 12/11/15 | 20:22:10 | 36°26'46" | 140°21'33" | f3→f1 | 24km |
| 12/11/16 | 09:33:50 | 36°20'38" | 140°26'11" | f3→f2 | 35km |
| ⋮ | ⋮ | ⋮ | ⋮ | ⋮ | ⋮ |

2600

2601

2602

FIG.27

# FIG.28-1

100

120

**COMMUNICATIONS CONTROL APPARATUS**

2822 STORAGE UNIT

2821 RECEIVING UNIT

122 OBTAINING UNIT

123 CALCULAT-ING UNIT

121 RECEIVING UNIT

124 SELECTING UNIT

125 TRANSMIT-TING UNIT

2830 RADIO COMMUNICATIONS APPARATUS

110 RADIO COMMUNICATIONS APPARATUS

112 TRANSMIT-TING UNIT

111 OBTAINING UNIT

113 RECEIVING UNIT

114 COMMUNICA-TIONS UNIT

# FIG.28-2

100

**120**

COMMUNICATIONS CONTROL APPARATUS

**2822**

STORAGE UNIT

**2821**

RECEIVING UNIT

SWITCHING INFORMATION

**2830**

RADIO COMMUNICATIONS APPARATUS

**110**

RADIO COMMUNICATIONS APPARATUS

**122**

OBTAINING UNIT

**123**

CALCULAT-ING UNIT

**121**

RECEIVING UNIT

ROUTE INFORMATION

**112**

TRANSMIT-TING UNIT

**111**

OBTAINING UNIT

**124**

SELECTING UNIT

**125**

TRANSMIT-TING UNIT

FREQUENCY INFORMATION

**113**

RECEIVING UNIT

**114**

COMMUNICA-TIONS UNIT

# FIG.28-3

100

COMMUNICATIONS CONTROL APPARATUS 120

STORAGE UNIT 2822

RECEIVING UNIT 2821

OBTAINING UNIT 122

CALCULAT-ING UNIT 123

RECEIVING UNIT 121

SELECTING UNIT 124

TRANSMIT-TING UNIT 125

SWITCHING INFORMATION

RANGE INFORMATION

FREQUENCY INFORMATION

RADIO COMMUNICATIONS APPARATUS 2830

RADIO COMMUNICATIONS APPARATUS 110

TRANSMIT-TING UNIT 112

OBTAINING UNIT 111

RECEIVING UNIT 113

COMMUNICA-TIONS UNIT 114

FIG.29

FIG.30-1

2910
SWITCHING HISTORY DATABASE SERVER

3012
SWITCHING
HISTORY
DATABASE

3013
FREQUENCY
SELECTING
UNIT

3011
COMMUNICATIONS UNIT

240
WS DATABASE SERVER

321
WS DATABASE

322
COMMUNICA-
TIONS UNIT

2921
ACCESS
POINT

ACCESS
POINT
2931

231
ACCESS POINT

312
COMMUNICA-
TIONS UNIT

311
ROUTE
OBTAINING
UNIT

313
FREQUENCY
SETTING
UNIT

314
COMMUNICA-
TIONS UNIT

## FIG.30-2

SWITCHING HISTORY DATABASE SERVER — 2910

SWITCHING HISTORY DATABASE — 3012

FREQUENCY SELECTING UNIT — 3013

COMMUNICATIONS UNIT — 3011

WS DATABASE SERVER — 240

WS DATABASE — 321

COMMUNICA-TIONS UNIT — 322

AVAILABLE FREQUENCY INFORMATION

CURRENT POSITION INFORMATION

SWITCHING INFORMATION

ACCESS POINT — 2921

ACCESS POINT

SWITCHING INFORMATION — 2931

PREDICTED ROUTE INFORMATION

AVAILABLE FREQUENCY INFORMATION

ACCESS POINT — 231

COMMUNICA-TIONS UNIT — 312

ROUTE OBTAINING UNIT — 311

FREQUENCY SETTING UNIT — 313

COMMUNICA-TIONS UNIT — 314

# FIG.31

# FIG.32

| LATITUDE | LONGITUDE | SWITCHING INFORMATION |
|----------|-----------|------------------------|
| 36°38'55" | 140°33'20" | f2→f3 |
| ⋮ | ⋮ | ⋮ |

EP 2 941 034 B1

FIG.33

(f1 INTERFERENCE)
3311

3310

240

200

231

230

p4    p5    p2    pA    p1

p3

p7

L1

f1
AVAILABLE

pB

pC    p6

1020

f4

f2  220

f3  1010

230

f1,f2,f3
AVAILABLE

f1,f3
AVAILABLE

f1
AVAILABLE

f1,f4
AVAILABLE

f1,f2,f4
AVAILABLE

1011
(f3 NOT AVAILABLE)

1021
(f4NOT AVAILABLE)

221 (f2 NOT AVAILABLE)

71

# FIG.34

3400

| | yy/mm/dd | hh:mm:ss | LATITUDE | LONGITUDE | AVAILABLE FREQUENCY |
|---|---|---|---|---|---|
| p1 | 12/11/11 | 10:00:00 | 36°43'00" | 140°22'00" | f1,f2,f4 |
| pA | 12/11/11 | 10:04:00 | 36°43'00" | 140°21'00" | f1,f4 |
| p2 | 12/11/11 | 10:10:00 | 36°43'00" | 140°19'00" | f1,f4 |
| pB | 12/11/11 | 10:13:00 | 36°42'00" | 140°19'00" | f1 |
| p3 | 12/11/11 | 10:16:00 | 36°42'00" | 140°17'00" | f1 |
| p4 | 12/11/11 | 10:19:00 | 36°43'00" | 140°17'00" | f1 |
| p5 | 12/11/11 | 10:22:00 | 36°43'00" | 140°18'00" | f1 |
| p6 | 12/11/11 | 10:28:00 | 36°41'00" | 140°18'00" | f1 |
| pC | 12/11/11 | 10:28:00 | 36°41'00" | 140°16'00" | f1,f3 |
| p7 | 12/11/11 | 10:28:00 | 36°41'00" | 140°15'00" | f1,f3 |
| ⋮ | ⋮ | ⋮ | ⋮ | ⋮ | ⋮ |

# FIG.35

3400

|  | yy/mm/dd | hh:mm:ss | LATITUDE | LONGITUDE | AVAILABLE FREQUENCY |
|---|---|---|---|---|---|
| p1 | 12/11/11 | 10:00:00 | 36°43'00" | 140°22'00" | f1,f2,f4 |
| pA | 12/11/11 | 10:04:00 | 36°43'00" | 140°21'00" | f4 |
| p2 | 12/11/11 | 10:10:00 | 36°43'00" | 140°19'00" | f4 |
| pB | 12/11/11 | 10:13:00 | 36°42'00" | 140°19'00" | f1 |
| p3 | 12/11/11 | 10:16:00 | 36°42'00" | 140°17'00" | f1 |
| p4 | 12/11/11 | 10:19:00 | 36°43'00" | 140°17'00" | f1 |
| p5 | 12/11/11 | 10:22:00 | 36°43'00" | 140°18'00" | f1 |
| p6 | 12/11/11 | 10:28:00 | 36°41'00" | 140°18'00" | f1 |
| pC | 12/11/11 | 10:28:00 | 36°41'00" | 140°16'00" | f1,f3 |
| p7 | 12/11/11 | 10:28:00 | 36°41'00" | 140°15'00" | f1,f3 |
| ⋮ | ⋮ | ⋮ | ⋮ | ⋮ | ⋮ |

# FIG.36

3400

|  | yy/mm/dd | hh:mm:ss | LATITUDE | LONGITUDE | AVAILABLE FREQUENCY |
|---|---|---|---|---|---|
| p1 | 12/11/11 | 10:00:00 | 36°43'00" | 140°22'00" | f1,f2,f4 |
| pA | 12/11/11 | 10:04:00 | 36°43'00" | 140°21'00" | f1 |
| p2 | 12/11/11 | 10:10:00 | 36°43'00" | 140°19'00" | f1 |
| pB | 12/11/11 | 10:13:00 | 36°42'00" | 140°19'00" | f1 |
| p3 | 12/11/11 | 10:16:00 | 36°42'00" | 140°17'00" | f1 |
| p4 | 12/11/11 | 10:19:00 | 36°43'00" | 140°17'00" | f1 |
| p5 | 12/11/11 | 10:22:00 | 36°43'00" | 140°18'00" | f1 |
| p6 | 12/11/11 | 10:28:00 | 36°41'00" | 140°18'00" | f1 |
| pC | 12/11/11 | 10:28:00 | 36°41'00" | 140°16'00" | f1,f3 |
| p7 | 12/11/11 | 10:28:00 | 36°41'00" | 140°15'00" | f1,f3 |
| ⋮ | ⋮ | ⋮ | ⋮ | ⋮ | ⋮ |

**EP 2 941 034 B1**

## REFERENCES CITED IN THE DESCRIPTION

### Patent documents cited in the description

- JP 2012054799 A
- US 2011310867 A1
- WO 2011070224 A1
- WO 2010109526 A1